(19) Europäisches Patentamt
European Patent Office
Office européen des brevets

(11) EP 4 749 706 A1

(12) # EUROPEAN PATENT APPLICATION

(43) Date of publication:
**27.05.2026 Bulletin 2026/22**

(21) Application number: **25217401.6**

(22) Date of filing: **20.11.2025**

(51) International Patent Classification (IPC):
***H01M 4/131*** *(2010.01)* ***H01M 4/36*** *(2006.01)*
***H01M 4/525*** *(2010.01)* ***H01M 4/62*** *(2006.01)*
***H01M 10/0525*** *(2010.01)*

(52) Cooperative Patent Classification (CPC):
**H01M 4/131; H01M 4/366; H01M 4/525; H01M 4/622; H01M 4/623; H01M 4/625; H01M 10/0525;** H01M 2004/021

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **20.11.2024 KR 20240166238**

(71) Applicant: **SAMSUNG SDI CO., LTD.**
**Yongin-si, Gyeonggi-do 17084 (KR)**

(72) Inventors:
- **KIM, Chaeyoung**
  **17084 Yongin-si, Gyeonggi-do (KR)**
- **LEE, Kukjoo**
  **17084 Yongin-si, Gyeonggi-do (KR)**
- **JEONG, Hyejeong**
  **17084 Yongin-si, Gyeonggi-do (KR)**
- **CHANG, Mise**
  **17084 Yongin-si, Gyeonggi-do (KR)**
- **LEE, Jungmin**
  **17084 Yongin-si, Gyeonggi-do (KR)**
- **KIM, Sundae**
  **17084 Yongin-si, Gyeonggi-do (KR)**
- **PARK, Sujin**
  **17084 Yongin-si, Gyeonggi-do (KR)**
- **JEONG, Euisoo**
  **17084 Yongin-si, Gyeonggi-do (KR)**

(74) Representative: **Michalski Hüttermann & Partner Patentanwälte mbB**
**Kaistraße 16A**
**40221 Düsseldorf (DE)**

(54) **ELECTRODE AND RECHARGEABLE LITHIUM BATTERY INCLUDING THE SAME**

(57) Electrodes and rechargeable lithium batteries including the electrodes are disclosed. The electrode may include an electrode current collector and a multi-layered active material layer thereon. The multi-layered active material layer may include first to third active material layers sequentially stacked on the electrode current collector. The first active material layer may include a first active material. The second active material layer may include a second active material and a first composite conductive material. The third active material layer may include a third active material and a second composite conductive material. The first composite conductive material may include a first carbon nanostructure and a first polymer. The second composite conductive material may include a second carbon nanostructure and a second polymer. The first polymer and the second polymer may be different from each other. The first polymer may have higher ionic conductivity than the second polymer.

FIG. 2

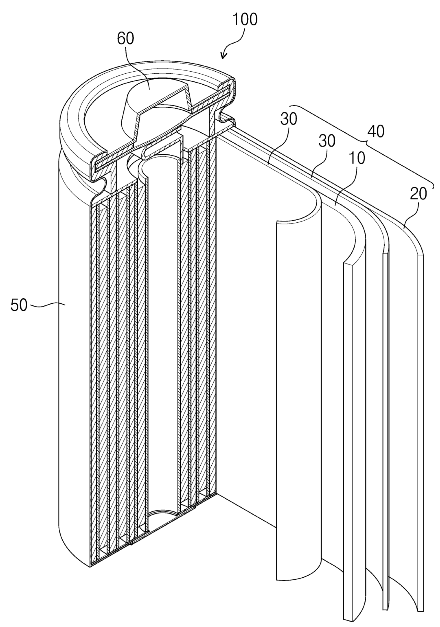


EP 4 749 706 A1

## Description

## CROSS-REFERENCE TO RELATED APPLICATION

The present application claims priority to and the benefit of Korean Patent Application No. 10-2024-0166238, filed on November 20, 2024, in the Korean Intellectual Property Office.

## BACKGROUND

### 1. Field

One or more embodiments of the present disclosure relate to an electrode and a rechargeable lithium battery including the electrode, and, for example, to an electrode where different composite conductive (e.g., electrically conductive) materials having different physical properties are applied to a multi-layered active material layer and a rechargeable lithium battery including the electrode.

One or more embodiments of the present disclosure relate a method of manufacturing an electrode for a rechargeable lithium battery.

### 2. Description of the Related Art

With the use of batteries in electronic devices, such as mobile phones and/or laptop computers, and/or electric vehicles, it is important to develop rechargeable batteries having high energy density and high capacity (e.g., high energy capacity). Therefore, intensive research has been conducted to improve or enhance performance of rechargeable lithium batteries.

A rechargeable lithium battery includes a positive electrode, a negative electrode, and an electrolyte. The positive electrode and the negative electrode include an active material in which intercalation and deintercalation may occur and generate electrical energy caused by oxidation and reduction reactions if (e.g., when) lithium ions are intercalated and deintercalated.

## SUMMARY

One or more aspects of embodiments of the present disclosure are directed toward an electrode having improved or enhanced capacity (e.g., energy capacity) and lifespan characteristics.

One or more aspects of embodiments of the present disclosure are directed toward a rechargeable lithium battery including the electrode.

One or more aspects of embodiments of the present disclosure are directed toward a method of manufacturing an electrode for a rechargeable lithium battery.

Additional aspects of embodiments will be set forth in part in the description which follows and, in part, will be apparent from the description or may be learned by practice of the presented embodiments of the disclosure.

According to one or more embodiments of the present disclosure, an electrode for a rechargeable lithium battery may include: an electrode current collector; and a multi-layered active (e.g., electrically active) material layer on the electrode current collector. The multi-layered active material layer may include a first active (e.g., electrically active) material layer, a second active (e.g., electrically active) material layer, and a third active (e.g., electrically active) material layer that are sequentially stacked on the electrode current collector. The first active material layer may include a first active (e.g., electrically active) material. The second active material layer may include a second active (e.g., electrically active) material and a first composite conductive (e.g., electrically conductive) material. The third active material layer may include a third active (e.g., electrically active) material and a second composite conductive (e.g., electrically conductive) material. The first composite conductive material may include: a first carbon nanostructure; and a first polymer physically and/or chemically bonded to a surface of the first carbon nanostructure. The second composite conductive material may include: a second carbon nanostructure; and a second polymer physically and/or chemically bonded to a surface of the second carbon nanostructure. The first polymer and the second polymer may be different from each other. An ionic conductivity of the first polymer may be higher than an ionic conductivity of the second polymer.

The ionic conductivity of the first and second polymers may be measured by impedance spectroscopy.

Specifically, the polymer sample is placed between conductive electrodes, and AC impedance is measured using an impedance analyzer (e.g., Solartron 1260, Bio-Logic VMP3) in a frequency range of 1 Hz to 1 MHz at 25 °C.

The ionic conductivity ($\sigma$) is calculated according to Equation (1) based on the sample thickness (t) and electrode area (A):

$$\sigma = t / (R \times A) \qquad \text{[Equation 1]}$$

where R is the resistance obtained from the Nyquist plot.

According to one or more embodiments of the present disclosure, a method of manufacturing an electrode for a rechargeable lithium battery may include: providing an electrode current collector; forming or providing a first active (e.g., electrically active) material layer on the electrode current collector; forming or providing a second active (e.g., electrically active) material layer on the first active material layer; and forming or providing a third active (e.g., electrically active) material layer on the second active material layer. The first active material layer may include a first active (e.g., electrically active) material. The second active material layer may include a second active (e.g., electrically active) material and a first composite conductive (e.g., electrically conductive) material. The third active material layer may include a third active (e.g., electrically active) material and a second composite conductive (e.g., electrically conductive) material. The method of manufacturing the first composite conductive material may include: introducing a functional group (e.g., a first functional group) to a surface of a first carbon nanostructure; and preparing a first mixture by mixing a first polymer and the first carbon nanostructure having the functional group (e.g., the first functional group). The method of manufacturing the second composite conductive material may include: introducing a functional group (e.g., a second functional group) to a surface of a second carbon nanostructure; and preparing a second mixture by mixing a second polymer and the second carbon nanostructure having the functional group (e.g., the second functional group). The first polymer may be different from the second polymer. An ionic conductivity of the first polymer may be higher than an ionic conductivity of the second polymer. The first functional group and the second functional group may be same or different.

According to one or more embodiments of the present disclosure, a rechargeable lithium battery may include: a positive electrode; a negative electrode; a separator between the positive electrode and the negative electrode; and an electrolyte. At least one selected from the positive electrode and the negative electrode may be the electrode as described in one or more embodiments.

## BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.

FIG. 1 is a simplified conceptual diagram illustrating a rechargeable lithium battery according to one or more embodiments of the present disclosure.

FIGS. 2-5 are simplified diagrams illustrating rechargeable lithium batteries according to one or more embodiments of the present disclosure, with FIG. 2 illustrating a cylindrical rechargeable lithium battery, FIG. 3 illustrating a prismatic rechargeable lithium battery, and FIGS. 4 and 5 illustrating pouch-type or kind rechargeable lithium batteries.

FIG. 6 is a cross-sectional view illustrating an electrode for a rechargeable lithium battery according to one or more embodiments of the present disclosure.

FIG. 7 is an enlarged view illustrating an electrode according to one or more embodiments of the present disclosure.

FIG. 8 is a cross-sectional view illustrating an electrode according to one or more embodiments of the present disclosure.

FIG. 9 is an enlarged view illustrating an electrode according to one or more embodiments of the present disclosure.

FIG. 10 is a diagram illustrating a method of manufacturing an electrode according to one or more embodiments of the present disclosure.

FIG. 11 is a schematic diagram illustrating a method of preparing composite conductive (e.g., electrically conductive) materials according to one or more embodiments of the present disclosure.

FIG. 12 is scanning electron microscope (SEM) images of composite conductive (e.g., electrically conductive) materials according to one or more embodiments of the present disclosure.

## DETAILED DESCRIPTION

In order to fully understand the aspects and features of the present disclosure, the subject matter of the present disclosure will be described below in more detail with reference to the accompanying drawings. The subject matter of the present disclosure may, however, be embodied in one or more forms and should not be construed as being limited to one or more embodiments set forth herein, and one or more changes and modifications can be made. Rather, these embodiments are provided as examples so that this disclosure will be thorough and complete and will fully convey the aspects and features of the present disclosure to those skilled in the art to which the present disclosure pertains.

As utilized herein, the singular forms "a," "an," and "the" are intended to include the plural forms as well, unless the

context clearly indicates otherwise.

The utilization of "may" if (e.g., when) describing embodiments of the present disclosure refers to "one or more embodiments of the present disclosure."

In the context of the present application and unless otherwise defined, the terms "use," "using," and "used" may be considered synonymous with the terms "utilize," "utilizing," and "utilized," respectively.

As used herein, the term "and/or" includes any and all combinations of one or more of the associated listed items. For example, "A and/or B" indicates cases where it is A, B, or both (e.g., simultaneously) A and B.

Throughout the present disclosure, the expression "at least one of a, b, or c" indicates only a, only b, only c, both (e.g., simultaneously) a and b, both (e.g., simultaneously) a and c, both (e.g., simultaneously) b and c, all of a, b, and c, or variations thereof.

In the present disclosure, it will be understood that, if (e.g., when) an element is referred to as being on another element, the element may be directly on the other element or intervening elements may be present therebetween. In contrast, if (e.g., when) an element is referred to as being "directly on" another element, there are no intervening elements present therebetween.

Like reference numerals refer to like elements throughout the specification.

One or more embodiments of the present disclosure will be described in more detail with reference to sectional and/or plan views as exemplary views of the present disclosure.

In the drawings, thicknesses of layers and regions may be exaggerated to effectively or suitably describe the technical contents of the present disclosure. Accordingly, regions exemplarily illustrated in the drawings have general properties, and shapes of regions exemplarily illustrated in the drawings are used to exemplarily disclose specific shapes but not limited to the scope of the present disclosure.

It will be understood that, although the terms "first", "second", "third", and/or the like may be used herein to describe one or more elements, these elements should not be limited by these terms. These terms are only used to distinguish one element from another element. Certain embodiments explained and illustrated herein include complementary embodiments thereof. For example, without departing from the scope of the present disclosure, a first element, a first component, a first region, a first layer, or a first portion may be referred to as a second element, a second component, a second region, a second layer, or a second portion, and similarly, the second element, the second component, the second region, the second layer, or the second portion may be referred to as the first element, the first component, the first region, the first layer, or the first portion.

Unless otherwise noted in the present disclosure, the expression of singular form may include the expression of plural form.

Unless otherwise noted, the phrase "A or B" may indicate "A but not B", "B but not A", and "A and B".

The terms "has," "includes," "having," and/or "including" used in the present disclosure do not exclude the presence or addition of one or more other components. For example, it should be understood that the term "comprise(s)/comprising," "include(s)/including," or "have/has/having" specifies the presence of stated features, integers, steps, operations, elements, and/or components, but do not preclude the presence or addition of one or more other features, integers, steps, operations, elements, components, and/or groups thereof. Also, the terms "comprise(s)/comprising," "include(s)/including," "have/has/having," or similar terms include or support the terms "consisting of" and "consisting essentially of," indicating the presence of stated features, integers, steps, operations, elements, and/or components, without or essentially without the presence of other features, integers, steps, operations, elements, components, and/or groups thereof.

In the present disclosure, the term "combination thereof" may refer to a mixture, a stack, a composite, a copolymer, an alloy, a blend, a reaction product, and/or the like of constituents.

Unless otherwise defined in the present disclosure, a particle diameter may be an average particle diameter. In one or more embodiments, a particle diameter indicates an average particle diameter ($D_{50}$) of particles having a cumulative volume of about 50 vol% in particle size distribution. The average particle diameter ($D_{50}$) may be measured by a method that is generally available to or generally used by those skilled in the art, for example, by a particle size analyzer and/or a transmission electron microscope (TEM) image and/or a scanning electron microscope (SEM) image. In one or more embodiments, a dynamic light scattering measurement device is utilized to perform a data analysis, the number of particles is counted for each particle size range, and then from this data, an average particle diameter ($D_{50}$) value may be obtained through a calculation. In one or more embodiments, a laser scattering method may be utilized to measure the average particle diameter ($D_{50}$). In the laser scattering method, a target particle is dispersed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter ($D_{50}$) is calculated in the 50% standard of particle diameter distribution in the measurement device.

As used herein, unless otherwise specified, the term "alkyl group" may refer to a C1 to C20 alkyl group, the term "alkenyl group" may refer to a C2 to C20 alkenyl group, the term "cycloalkenyl group" may refer to a C3 to C20 cycloalkenyl group, the term "heterocycloalkenyl group" may refer to a C2 to C20 heterocycloalkenyl group, the term "aryl group" may

refer to a C6 to C20 aryl group, the term "arylalkyl group" may refer to a C6 to C20 arylalkyl group, the term "alkylene group" may refer to a C1 to C20 alkylene group, the term "arylene group" may refer to a C6 to C20 arylene group, the term "alkylarylene group" may refer to a C6 to C20 alkylarylene group, the term "heteroarylene group" may refer to a C3 to C20 heteroarylene group, and the term "alkoxylene group" may refer to a C1 to C20 alkoxylene group.

As used herein, unless otherwise specified, the term "substituted" may refer to replacement of at least one hydrogen atom by a substituent selected from among a halogen atom (F, Cl, Br, or I), a hydroxyl group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, a C3 to C20 heteroaryl group, and a combination thereof.

As used herein, unless otherwise specified, the term "hetero" may refer to inclusion of at least one heteroatom selected from among N, O, S, and P, in addition to carbon atom(s), in the chemical formula.

As used herein, unless otherwise specified, the term "(meth)acrylate" may refer to both "acrylate" and "methacrylate", and the term "(meth)acrylic acid" may refer to both "acrylic acid" and "methacrylic acid."

As used herein, unless otherwise specified, the term "combination" may refer to mixing or copolymerization.

As used herein, unless otherwise specified, the symbol "*" may refer to a linking point with the same or different atom or chemical formula.

FIG. 1 is a simplified conceptual diagram illustrating a rechargeable lithium battery according to one or more embodiments of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced and/or apart (e.g., spaced apart or separated) from each other across the separator 30. The separator 30 may be disposed or provided between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be a medium by which lithium ions are transferred between the positive electrode 10 and the negative electrode 20. In the electrolyte ELL, the lithium ions may move through the separator 30 toward one selected from the positive electrode 10 and the negative electrode 20.

### Positive Electrode

The positive electrode 10 for the rechargeable lithium battery may include a current collector COL1 and a positive electrode active material layer AML1 formed or provided on the current collector COL1. The positive electrode active material layer AML1 may include a positive electrode active (e.g., electrically active) material and further include a binder and/or a conductive (e.g., electrically conductive) material.

For example, the positive electrode 10 may further include an additive that may serve as a sacrificial positive electrode.

An amount of the positive electrode active material in the positive electrode active material layer AML1 may range from ≥ 90 wt% to ≤ 99.5 wt% relative to 100 wt% (e.g., based on 100 wt%) of the positive electrode active material layer AML1. Amounts of the binder and the conductive material may each be ≥ 0.5 wt% to ≤ 5 wt% relative to 100 wt% (e.g., based on 100 wt%) of the positive electrode active material layer AML1.

The binder may serve to improve or enhance attachment of positive electrode active (e.g., electrically active) material particles to each other and also to improve or enhance attachment of the positive electrode active material to the current collector COL1. The binder may include, for example, polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and/or nylon, but embodiments of the present disclosure are not limited thereto.

The conductive material may be used to provide an electrode with conductivity (e.g., electrical conductivity), and any suitable conductive (e.g., electrically conductive) material that does not cause a chemical change (e.g., an undesirable chemical change) in a rechargeable lithium battery may be used as the conductive material. For example, the conductive material may include a carbon-based material, such as natural graphite, artificial graphite, carbon black, acetylene black, Ketjen black, carbon fiber, carbon nanofiber, and/or carbon nanotube; a metal-based material in the form of a metal powder and/or a metal fiber including one or more selected from among copper, nickel, aluminum, and silver; a conductive (e.g., electrically conductive) polymer, such as polyphenylene and/or a polyphenylene derivative; or a mixture thereof.

Aluminum (Al) may be used as the current collector COL1, but embodiments of the present disclosure are not

limited thereto.

### Positive Electrode Active Material

The positive electrode active (e.g., electrically active) material in the positive electrode active material layer AML1 may include a compound (e.g., a lithiated intercalation compound) that may reversibly intercalate and deintercalate lithium. For example, the positive electrode active material may include at least one type or kind of composite oxide including lithium and metal that is selected from among cobalt, manganese, nickel, and a combination thereof.

The composite oxide may include lithium transition metal composite oxide, for example, lithium-nickel-based oxide, lithium-cobalt-based oxide, lithium-manganese-based oxide, lithium-iron-phosphate-based compounds, cobalt-free nickel-manganese-based oxide, or a combination thereof.

For example, the positive electrode active material may include a compound expressed by one selected from among the following chemical formulae: $Li_aA_{1-b}X_bO_{2-c}D_c$ (where $0.90\leq a\leq 1.8$, $0\leq b\leq 0.5$, and $0\leq c\leq 0.05$); $Li_aMn_{2-b}X_bO_{4-c}D_c$ (where $0.90\leq a\leq 1.8$, $0\leq b\leq 0.5$, and $0\leq c\leq 0.05$); $Li_aNi_{1-b-c}Co_bX_cO_{2-\alpha}D_\alpha$ (where $0.90\leq a\leq 1.8$, $0\leq b\leq 0.5$, $0\leq c\leq 0.5$, and $0<\alpha<2$); $Li_aNi_{1-b-c}Mn_bX_cO_{2-\alpha}D_\alpha$ (where $0.90\leq a\leq 1.8$, $0\leq b\leq 0.5$, $0\leq c\leq 0.5$, and $0<\alpha<2$); $Li_aNi_bCo_cL^1_dG_eO_2$(where $0.90\leq a\leq 1.8$, $0\leq b\leq 0.9$, $0\leq c\leq 0.5$, $0\leq d\leq 0.5$, and $0\leq e\leq 0.1$); $Li_aNiG_bO_2$ (where $0.90\leq a\leq 1.8$ and $0.001\leq b\leq 0.1$); $Li_aCoG_bO_2$ (where $0.90\leq a\leq 1.8$ and $0.001\leq b\leq 0.1$); $Li_aMn_{1-b}G_bO_2$ (where $0.90\leq a\leq 1.8$ and $0.001\leq b\leq 0.1$); $Li_aMn_2G_bO_4$ (where $0.90\leq a\leq 1.8$ and $0.001\leq b\leq 0.1$); $Li_aMn_{1-g}G_gPO_4$ (where $0.90\leq a\leq 1.8$ and $0\leq g\leq 0.5$); $Li_{(3-f)}Fe_2(PO_4)_3$ (where $0\leq f\leq 2$); and $Li_aFePO_4$ (where $0.90\leq a\leq 1.8$).

In the foregoing chemical formulae, A may be nickel (Ni), cobalt (Co), manganese (Mn), or a combination thereof, X may be aluminum (Al), nickel (Ni), Co, Mn, chromium (Cr), iron (Fe), magnesium (Mg), strontium (Sr), vanadium (V), a rare-earth element, or a combination thereof, D may be oxygen (O), fluorine (F), sulfur (S), phosphorus (P), or a combination thereof, G may be Al, Cr, Mn, Fe, Mg, lanthanum (La), cerium (Ce), Sr, V, or a combination thereof, and $L^1$ may be Mn, Al, or a combination thereof.

For example, the positive electrode active material may be a high-nickel-based positive electrode active (e.g., electrically active) material having a nickel amount of equal to or greater than 80 mol%, equal to or greater than 85 mol%, equal to or greater than 90 mol%, equal to or greater than 91 mol%, or equal to or greater than 94 mol% and equal to or less than 99 mol% relative to 100 mol% (e.g., based on 100 mol%) of metal devoid of lithium in the lithium transition metal composite oxide. The high-nickel-based positive electrode active material may achieve high capacity (e.g., high energy capacity) and thus may be applied to a rechargeable lithium battery having high capacity (e.g., high energy capacity) and high density (e.g., high energy density).

### Negative Electrode

The negative electrode 20 for the rechargeable lithium battery may include a current collector COL2 and a negative electrode active material layer AML2 on the current collector COL2. The negative electrode active material layer AML2 may include a negative electrode active (e.g., electrically active) material and may further include a binder and/or a conductive (e.g., electrically conductive) material.

For example, the negative electrode active material layer AML2 may include a negative electrode active (e.g., electrically active) material of ≥90 wt% to ≤ 99 wt%, a binder of ≥0.5 wt% to ≤ 5 wt%, and a conductive (e.g., electrically conductive) material of ≥ 0 wt% to ≤ 5 wt%.

The binder may serve to improve or enhance attachment of negative electrode active (e.g., electrically active) material particles to each other and also to improve or enhance attachment of the negative electrode active material to the current collector COL2. The binder may include a non-aqueous (e.g., water-insoluble) binder, an aqueous (e.g., water-soluble) binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluoro elastomer, polyethylene oxide, polyvinyl pyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenolic resin, an epoxy resin, polyvinyl alcohol, or a combination thereof.

If (e.g., when) an aqueous (e.g., water-soluble) binder is used as the negative electrode binder, a cellulose-based compound capable of providing or increasing viscosity may further be included. The cellulose-based compound may include one or more selected from among carboxymethyl cellulose, hydroxypropyl methylcellulose, methyl cellulose, and alkali metal salts thereof. The alkali metal may include sodium (Na), potassium (K), and/or lithium (Li).

The dry binder may include a fibrillizable polymer material, for example, polytetrafluoroethylene, polyvinylidene

fluoride, a polyvinylidene fluoride-hexafluoropropylene copolymer, polyethylene oxide, or a combination thereof.

The conductive material may be used to provide an electrode with conductivity (e.g., electrical conductivity), and any suitable conductive (e.g., electrically conductive) material that does not cause a chemical change (e.g., an undesirable chemical change) in a rechargeable lithium battery may be used as the conductive material. For example, the conductive material may include a carbon-based material, such as natural graphite, artificial graphite, carbon black, acetylene black, Ketjen black, carbon fiber, carbon nanofiber, and/or carbon nanotube; a metal-based material in the form of a metal powder and/or a metal fiber including one or more selected from among copper, nickel, aluminum, and silver; a conductive (e.g., electrically conductive) polymer, such as polyphenylene and/or a polyphenylene derivative; or a mixture thereof.

The current collector COL2 may include a copper foil, a nickel foil, a stainless-steel foil, a titanium foil, a nickel foam, a copper foam, a polymer substrate coated with a conductive (e.g., electrically conductive) metal, or a combination thereof.

**Negative Electrode Active Material**

The negative electrode active material in the negative electrode active material layer AML2 may include a material that may reversibly intercalate and deintercalate lithium ions, lithium metal, a lithium metal alloy, a material that may dope and de-dope lithium, and/or transition metal oxide.

The material that may reversibly intercalate and deintercalate lithium ions may include a carbon-based negative electrode active (e.g., electrically active) material, for example, crystalline carbon, amorphous (e.g., non-crystalline) carbon, or a combination thereof. For example, the crystalline carbon may include graphite, such as non-shaped, sheet-shaped (e.g., substantially sheet-shaped), flake-shaped (e.g., substantially flake-shaped), sphere-shaped (e.g., substantially sphere-shaped), or fiber-shaped (e.g., substantially fiber-shaped) natural graphite and/or artificial graphite, and the amorphous carbon may include soft carbon, hard carbon, mesophase pitch carbon, and/or calcined coke.

The lithium metal alloy may include an alloy of lithium and metal that is selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn).

The material that may dope and de-dope lithium may include a Si-based negative electrode active (e.g., electrically active) material and/or a Sn-based negative electrode active (e.g., electrically active) material. The Si-based negative electrode active material may include silicon, silicon-carbon composite, $SiO_x$ (where $0 < x \leq 2$; e.g., $SiO_2$), a Si-Q alloy (where Q is alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include Sn, $SnO_k$ (where $0 < k \leq 2$; e.g., $SnO_2$), a Sn-based alloy, a combination thereof.

The silicon-carbon composite may be a composite of silicon and amorphous (e.g., non-crystalline) carbon. According to one or more embodiments, the silicon-carbon composite may have a structure in which the amorphous carbon is coated on a surface of the silicon particle. For example, the silicon-carbon composite may include a secondary particle (core) in which primary silicon particles are assembled, and an amorphous (e.g., non-crystalline) carbon coating layer (shell) on a surface of the secondary particle. The amorphous carbon may also be between the primary silicon particles, and, for example, the primary silicon particles may be coated with the amorphous carbon. The secondary particles may be present dispersed in an amorphous (e.g., non-crystalline) carbon matrix.

The silicon-carbon composite may further include crystalline carbon. For example, the silicon-carbon composite may include a core including crystalline carbon and silicon particles and may also include an amorphous (e.g., non-crystalline) carbon coating layer on a surface of the core.

The Si-based negative electrode active material and/or the Sn-based negative electrode active material may be used in combination with a carbon-based negative electrode active (e.g., electrically active) material.

**Separator**

Based on a type or kind of the rechargeable lithium battery, the separator 30 may be present between the positive electrode 10 and the negative electrode 20. The separator 30 may include one or more selected from among polyethylene, polypropylene, and polyvinylidene fluoride and may have a multi-layered separator thereof, such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer on one surface or two opposite surfaces of the porous substrate, which coating layer includes an organic material, an inorganic material, or a combination thereof.

The porous substrate may be a polymer layer including one selected from among polyolefin, such as polyethylene and/or polypropylene, polyester, such as polyethylene terephthalate and/or polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, a cyclic olefin copolymer, polyphenylenesulphide, polyethylene naphthalate, glass fiber, and/or polytetrafluoroethylene (PTFE; e.g., Teflon™) or may be a copolymer or mixture including two or more selected from among the materials as described herein.

The organic material may include a polyvinylidenefluoride-based copolymer and/or a (meth)acrylic copolymer.

The inorganic material may include an inorganic particle selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, or a combination thereof, but embodiments of the present disclosure are not limited thereto.

The organic material and the inorganic material may be present mixed in one coating layer or may be present as a stack of a coating layer including the organic material and a coating layer including an inorganic material.

**Electrolyte**

The electrolyte ELL for the rechargeable lithium battery may include a non-aqueous (e.g., water-insoluble) organic solvent and a lithium salt.

The non-aqueous organic solvent may serve as a medium to transmit ions that participate in an electrochemical reaction of the rechargeable lithium battery.

The non-aqueous organic solvent may include a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and/or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, and/or caprolactone.

The ether-based solvent may include dibutyl ether, tetraglyme, diglyme, dimethoxyethane, 2-methyltetrahydrofuran, 2,5-dimethyltetrahydrofuran, and/or tetrahydrofuran. The ketone-based solvent may include cyclohexanone. The alcohol-based solvent may include ethyl alcohol and/or isopropyl alcohol, and the aprotic solvent may include nitriles, such as R-CN (where R is a hydrocarbon group having a C2 to C20 linear, branched, or cyclic structure and may include a double bond, an aromatic ring, and/or an ether group); amides, such as dimethylformamide; dioxolanes, such as 1,3-dioxolane and/or 1.4-dioxolane; and/or sulfolanes.

The non-aqueous organic solvent may be used alone or in a mixture of two or more solvents.

In one or more embodiments, if (e.g., when) a carbonate-based solvent is used, a cyclic carbonate and a linear carbonate may be mixed and used, and the cyclic carbonate and the linear carbonate may be mixed in a volume ratio of $\geq$ 1:1 to $\leq$ 1:9.

The lithium salt may be a material that is dissolved in the non-aqueous organic solvent to serve as a supply source of lithium ions in a rechargeable lithium battery and plays a role in enabling a basic operation of a rechargeable lithium battery and in promoting or enhancing the movement of lithium ions between the positive electrode and the negative electrode. The lithium salt may include, for example, at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers of 1 to 20), lithium trifluoromethane sulfonate, lithium tetrafluoroethanesulfonate, lithium difluorobis(oxalato)borate (LiDFOB), lithium difluorobis(oxalato)phosphate (LiDFOP), and lithium bis(oxalato)borate (LiBOB).

**Rechargeable Lithium Battery**

Based on a shape of a rechargeable lithium battery, the rechargeable lithium battery may be classified into cylindrical, prismatic, pouch, and coin types or kinds. FIGS. 2 to 5 are simplified diagrams illustrating a rechargeable lithium battery according to one or more embodiments of the present disclosure, with FIG. 2 illustrating a cylindrical rechargeable lithium battery, FIG. 3 illustrating a prismatic rechargeable lithium battery, and FIGS. 4 and 5 illustrating pouch-type or kind rechargeable lithium batteries. Referring to FIGS. 2 to 4, a rechargeable lithium battery 100 may include an electrode assembly 40 in which a separator 30 is between a positive electrode 10 and a negative electrode 20 and may also include a casing 50 in which the electrode assembly 40 is accommodated. The positive electrode 10, the negative electrode 20, and the separator 30 may be impregnated in an electrolyte. The rechargeable lithium battery 100 may include a sealing member 60 that seals the casing 50 as illustrated in FIG. 2. In one or more embodiments, as illustrated in FIG. 3, the rechargeable lithium battery 100 may include a positive electrode lead tab 11, a positive electrode terminal 12, a negative electrode lead tab 21, and a negative electrode terminal 22. As illustrated in FIGS. 4 and 5, the rechargeable lithium battery 100 may include an electrode tab 70, or a positive electrode tab 71 and a negative electrode tab 72, which the electrode tab 70 serves as an electrical path to externally induce a current generated in the electrode assembly 40.

According to one or more embodiments of the present disclosure, a rechargeable lithium battery may be provided to include an electrode, a separator, and an electrolyte. For example, a rechargeable lithium battery according to one or more embodiments may include a positive electrode including a positive electrode active (e.g., electrically active) material, a negative electrode including a negative electrode active (e.g., electrically active) material, a separator, and an electrolyte between the positive electrode and the negative electrode. One or both (e.g., simultaneously) of the positive electrode and the negative electrode may be an electrode as described in one or more embodiments, and, for example, the positive electrode may be the following electrode.

**Electrode for Rechargeable Lithium Battery**

The following description will focus on an electrode according to one or more embodiments of the present disclosure.

FIG. 6 is a cross-sectional view illustrating an electrode for a rechargeable lithium battery according to one or more embodiments of the present disclosure.

Referring to FIG. 6, an electrode 10 or 20 may include an electrode current collector COL and an active material layer AML on the electrode current collector COL.

The electrode current collector COL may include the current collector COL1 or the current collector COL2 as described in one or more embodiments.

For example, the electrode current collector COL may include a copper foil, a nickel foil, a stainless-steel foil, a titanium foil, a nickel foam, a copper foam, a polymer substrate coated with a conductive (e.g., electrically conductive) metal, or a combination thereof.

In one or more embodiments, aluminum (Al) may be used as the electrode current collector COL, but embodiments of the present disclosure are not limited thereto.

The active material layer AML may have a structure of multi-layered active (e.g., electrically active) material layer. The multi-layered active material layer may include a first active material layer ATL1, a second active material layer ATL2, and a third active material layer ATL3 that are sequentially stacked on the electrode current collector COL. The multi-layered active material layer may be configured or provided such that the first active material layer ATL1 is on the electrode current collector COL, the second active material layer ATL2 is on the first active material layer ATL1, and the third active material layer ATL3 is on the second active material layer ATL2.

The first active material layer ATL1 may have a thickness TKL1, the second active material layer ATL2 may have a thickness TKL2, and the third active material layer ATL3 may have a thickness TKL3.

A thickness TKL of the active material layer AML may be a total sum of the thickness TKL1 of the first active material layer ATL1, the thickness TKL2 of the second active material layer ATL2, and the thickness TKL3 of the third active material layer ATL3.

The thickness TKL of the active material layer AML may range from ≥ 10 μm to ≤ 170 μm. For example, the thickness TKL of the active material layer AML may be equal to or greater than 10 μm, equal to or greater than 11 μm, equal to or greater than 15 μm, equal to or greater than 20 μm, equal to or greater than 30 μm, or equal to or greater than 40 μm. For example, the thickness TKL of the active material layer AML may be equal to or less than 170 μm, equal to or less than 160 μm, equal to or less than 150 μm, equal to or less than 140 μm, equal to or less than 130 μm, equal to or less than 120 μm, equal to or less than 110 μm, equal to or less than 100 μm, equal to or less than 90 μm, equal to or less than 80 μm, equal to or less than 70 μm, equal to or less than 60 μm, or equal to or less than 50 μm. If (e.g., when) the thickness TKL of the active material layer AML falls within the foregoing ranges, a rechargeable lithium battery may have an increased or enhanced lifespan and a minimum or reduced change in volume during charge and discharge.

The thickness TKL1 of the first active material layer ATL1 may range from ≥ 10 μm to ≤ 120 μm. For example, the thickness TKL1 of the first active material layer ATL1 may be equal to or greater than 15 μm, equal to or greater than 20 μm, equal to or greater than 30 μm, or equal to or greater than 40 μm. For example, the thickness TKL1 of the first active material layer ATL1 may be equal to or less than 90 μm, equal to or less than 80 μm, equal to or less than 70 μm, equal to or less than 60 μm, equal to or less than 50 μm, or equal to or less than 40 μm.

The thickness TKL2 of the second active material layer ATL2 may range from ≥ 10 μm to ≤ 120 μm. For example, the thickness TKL2 of the second active material layer ATL2 may be equal to or greater than 15 μm, equal to or greater than 20 μm, equal to or greater than 30 μm, or equal to or greater than 40 μm. For example, the thickness TKL2 of the second active material layer ATL2 may be equal to or less than 90 μm, equal to or less than 80 μm, equal to or less than 70 μm, equal to or less than 60 μm, equal to or less than 50 μm, or equal to or less than 40 μm.

The thickness TKL3 of the third active material layer ATL3 may range from ≥ 10 μm to ≤ 120 μm. For example, the thickness TKL3 of the third active material layer ATL3 may be equal to or greater than 15 μm, equal to or greater than 20 μm, equal to or greater than 30 μm, or equal to or greater than 40 μm. For example, the thickness TKL3 of the third active material layer ATL3 may be equal to or less than 90 μm, equal to or less than 80 μm, equal to or less than 70 μm, equal to or less than 60 μm, equal to or less than 50 μm, or equal to or less than 40 μm.

If (e.g., when) the thickness TKL1 of the first active material layer ATL1 falls within the foregoing ranges, if (e.g., when) the thickness TKL2 of the second active material layer ATL2 falls within the foregoing ranges, and if (e.g., when) the thickness TKL3 of the third active material layer ATL3 falls within the foregoing ranges, a rechargeable lithium battery may have an increased or enhanced lifespan and a minimum or reduced change in volume during charge and discharge. In one or more embodiments, the active material layer AML may have an increased or enhanced adhesive force to the electrode current collector COL, and thus it may be feasible to maximize or increase energy capacity and energy density of the rechargeable lithium batteries and at the same time (e.g., concurrently) to achieve the easiness of electrode plate process.

In one or more embodiments, the thickness TKL1 may increase due to an increase in weight of an active (e.g., electrically active) material included in the first active material layer ATL1. In one or more embodiments, an increase in weight of an active (e.g., electrically active) material included in the second active material layer ATL2 may lead to an increase in the thickness TKL2. In one or more embodiments, an increase in weight of an active (e.g., electrically active) material included in the third active material layer ATL3 may lead to an increase in the thickness TKL3.

According to one or more embodiments, a thickness ratio (TKL1:TKL2:TKL3) of the first active material layer ATL1, the second active material layer ATL2, and the third active material layer ATL3 may be about 1:1:1.

FIG. 7 is an enlarged view illustrating an electrode according to one or more embodiments of the present disclosure. For example, FIG. 7 is an enlarged view illustrating the section M of FIG. 6.

Referring to FIG. 7, the first active material layer ATL1 may include a first active material CAM1, a binder BND, and a conductive material CDM.

The first active material CAM1 may include a compound (e.g., a lithiated intercalation compound) that may reversibly intercalate and deintercalate lithium. The first active material CAM1 may include lithium composite oxide represented by Chemical Formula 2.

Chemical Formula 2 $$Li_{x4}M^1_yM^2_zM^3_{1-y-z}O_{2-a}X_a$$

In Chemical Formula 2,

The subscripts x4, a, y, and z may satisfy the relationship of $0.5\leq x4\leq 1.8$, $0\leq a\leq 0.05$, $0<y\leq 1$, $0\leq z\leq 1$, and $0\leq y+z\leq 1$.

$M^1$, $M^2$, and $M^3$ may each independently include at least one element selected from among metals, such as Ni, Co, Mn, Al, boron (B), Ba, Ca, Ce, Cr, Fe, molybdenum (Mo), niobium (Nb), Si, Sr, Mg, titanium (Ti), V, tungsten (W), zirconium (Zr), La, and a combination thereof.

X may include at least one element selected from among F, S, P, and chlorine (Cl).

In one or more embodiments, in Chemical Formula 2, $M^1$ may be Ni, and y and z may satisfy the relationship of $0.8\leq y\leq 1$ and $0\leq z\leq 0.2$. For example, the first active material CAM1 may include lithium manganese iron phosphate (LMFP or $LiFeMnPO_4$), nickel manganese oxide (NMX or $NiMnO_2$), lithium nickel cobalt aluminum oxide (NCA or $LiNiCoAlO_2$), and/or lithium nickel cobalt manganese oxide (NCM or $LiNiCoMnO_2$).

The binder BND may serve to improve or enhance attachment of particles of the first active material CAM1 to each other and also to improve or enhance attachment of the first active material CAM1 to the electrode current collector COL. For example, the binder BND may include at least one selected from among a rubber-based binder, an acrylate-based binder, a polyvinylidenefluoride-based binder, a polyvinylpyrrolidone-based binder, an acetate-based binder, a polyvinyl alcohol-based binder, and/or a cellulose-based binder, but embodiments of the present disclosure are not limited thereto.

The rubber-based binder may be, for example, styrene-butadiene rubber (SBR), nitrile-butadiene rubber (NBR), hydrogenated nitrile-butadiene rubber (HNBR), and/or ethylene propylene diene monomer rubber (EPDM).

The acrylate-based binder may be, for example, polyacrylic acid (PAA), polymethylmethacrylate, polyisobutylmethacrylate, polyethylacrylate, polybutyl acrylate, and/or poly(2-ethylhexyl acrylate).

The polyvinylidenefluoride-based binder may be, for example, polyvinylidenefluoride, polyvinylidenefluoride-co-hexafluoropropylene, polyvinylidenefluoride-co-trichloroethylene, polyvinylidenefluoride-co-tetrafluoroethylene, polyvinylidenefluoride-co-trifluoroethylene, polyvinylidenefluoride-co-trifluorochloroethylene, polyvinylidenefluoride-co-ethylenefluoride-hexafluoropropylene, polyvinylidenefluoride-co-hexafluoropropylene (PVdF-HFP), and/or polyvinylidenefluoride-co-trichloroethylene.

The polyvinylpyrrolidone-based binder may be, for example, polyvinylpyrrolidone.

The nitrile-based binder may be, for example, polyacrylonitrile and/or an acrylonitrile-styrene-butadiene copolymer.

The acetate-based binder may be, for example, polyvinyl acetate, polyethylene-co-vinyl acetate, cellulose acetate, cellulose acetate butyrate, and/or cellulose acetate propionate.

The polyvinyl alcohol-based binder may be, for example, polyvinyl alcohol.

The cellulose-based binder may be, for example, carboxymethyl cellulose (CMC), methyl cellulose (MC), hydroxypropyl cellulose (HPC), methyl hydroxypropyl cellulose (MHPC), ethyl hydroxyethyl cellulose (EHEC), methyl ethyl hydroxyethyl cellulose (MEHEC), and/or cellulose gum.

The conductive material CDM may be used to provide the electrode 10 or 20 with conductivity (e.g., electrical conductivity), and any suitable conductive (e.g., electrically conductive) material that does not cause a chemical change (e.g., an undesirable chemical change) in a rechargeable lithium battery may be utilized as a conductive (e.g., electrically conductive) material, for example, a carbon-based material, such as natural graphite, artificial graphite, carbon black, acetylene black, Ketjen black, carbon fiber, carbon nanofiber, and/or carbon nanotube; a metallic material, such as a metal powder and/or a metal fiber containing one or more selected from among copper, nickel, aluminum, and silver; a conductive (e.g., electrically conductive) polymer, such as polyphenylene and/or a polyphenylene derivative; or a mixture thereof.

According to one or more embodiments, the first active material CAM1 may be present in an amount of ≥ 90 wt% to ≤ 99.5 wt% relative to the total weight (e.g., based on 100 wt%) of the first active material layer ATL1. According to one or more embodiments, the binder BND may be present in an amount of ≥ 0.1 wt% to ≤ 5 wt% relative to the total weight (e.g., based on 100 wt%) of the first active material layer ATL1. According to one or more embodiments, the conductive material CDM may be present in an amount of ≥ 0.1 wt% to ≤ 5 wt% relative to the total weight (e.g., based on 100 wt%) of the first active material layer ATL1.

If (e.g., when) the first active material layer ATL1 satisfies the foregoing amount ranges of the first active material CAM1, the binder BND, and the conductive material CDM, it may be feasible to maximize or increase energy capacity and energy density of the rechargeable lithium batteries.

The second active material layer ATL2 may be formed or provided to contact one surface of the first active material layer ATL1. The one surface of the first active material layer ATL1 may be a surface at which the first active material layer ATL1 is not in contact with the electrode current collector COL.

The second active material layer ATL2 may include a second active material CAM2 and a first composite conductive material CCM1.

The second active material CAM2 may be substantially the same as the first active material CAM1 as described in one or more embodiments in the first active material layer ATL1. For example, the second active material CAM2 may include lithium composite oxide represented by Chemical Formula 2.

At an intermediate of the active material layer (see AML of FIG. 6), the first composite conductive material CCM1 may secure lithium ion paths without the occurrence of binder migration. In one or more embodiments, the first composite conductive material CCM1 may include a first polymer containing a functional group effective or suitable to lithium ion transfer, exhibiting remarkably excellent or suitable ionic conductivity.

The first composite conductive material CCM1 may include a first carbon nanostructure and a first polymer that is physically and/or chemically bonded to a surface of the first carbon nanostructure. The expression "chemically bonded" may indicate that "bonded via ionic bond and/or covalent bond." The expression "physically bonded" may denote that "components are simply mixed without changes in chemical properties of each component."

It may be appropriate or suitable that a composite conductive material CCM according to the present disclosure have a structure in which a carbon nanostructure and an adhesive polymer are chemically bonded, but embodiments of the present disclosure are not limited thereto.

As the first composite conductive material CCM1 is formed or composed of the first carbon nanostructure and the first polymer that are chemically bonded, the first carbon nanostructure may be satisfactorily or suitably dispersed without being aggregated. Thus, the first composite conductive material CCM1 may improve or enhance dispersibility and may form or provide a conductive (e.g., electrically conductive) path even with a small amount to achieve high capacity (e.g., high energy capacity). In one or more embodiments, even if (e.g., when) an active (e.g., electrically active) material shrinks and expands resulting from charge and discharge during battery (e.g., rechargeable lithium battery) operation, there may be no occurrence of agglomeration caused by migration of the first carbon nanostructure. If (e.g., when) the first composite conductive material CCM1 is used, a binder ratio may decrease to allow for the formation of pores within an electrode plate, and this may ensure paths for $Li^+$ ions to improve or enhance a thickness-directional degradation within the electrode plate during charge and discharge, which may result in an enhancement in lifespan and rate properties.

The first carbon nanostructure may include a chain or elongated shaped carbon material not only exhibiting excellent or suitable mechanical strength, thermal conductivity, and chemical stability but also having electrical conductivity.

The first carbon nanostructure may be manufactured by a fabrication method that is generally available or generally used, for example, arc discharge, laser ablation, chemical vapor deposition, and/or high-pressure carbon monoxide (HIPCO).

The first carbon nanostructure may have a nano-scale diameter and a micro-scale length. For example, the first carbon nanostructure may have a diameter of ≥ 5 nm to ≤ 100 nm, ≥ 15 nm to ≤ 90 nm, ≥ 20 nm to ≤ 80 nm, or ≥ 30 nm to ≤ 70 nm, and a length of ≥ 10 μm to ≤ 100 μm, ≥ 15 μm to ≤ 90 μm, ≥ 20 μm to ≤ 80 μm, or ≥ 30 μm to ≤ 70 μm.

For example, the first carbon nanostructure may include at least one selected from among carbon nanotube (CNT), carbon nanofiber (CNF), polyacetylene, graphene nanoribbon (GNR), graphene sheet, fullerene, nanodiamond, mesoporous carbon, amorphous (e.g., non-crystalline) carbon, carbon quantum dot, nanoporous carbon, carbon black,

nanohorn, and vitreous carbon. For example, the first carbon nanostructure may include carbon nanotube (CNT). The carbon nanotube (CNT) may include a single-walled carbon nanotube (SWCNT) and/or a multi-walled carbon nanotube (MWCNT).

The first polymer may include an ionic polymer. There may be no limitation on molecular weight of the ionic polymer, but it may be necessary or desirable that the ionic polymer possess a functional group, such as a hydroxyl group, a carboxyl group, and/or an amine group, and be compatible with an active (e.g., electrically active) material and other additives included in an electrode composition to ensure no issues arise during preparation of slurry. It may also be necessary or desirable that the ionic polymer have stable or suitable electrochemical properties during charge and discharge of a rechargeable lithium battery.

The first polymer may have characteristics different from those of a second polymer which will be discussed herein.

For example, the first polymer may have an ionic conductivity different from that of a second polymer which will be discussed herein. The ionic conductivity may be one of important physical properties that indicate how effectively or suitably a polymer transports ions and may be measured through an electrochemical method, such as impedance spectroscopy.

The ionic conductivity of the first polymer may be higher than the ionic conductivity of a second polymer which will be discussed herein. According to one or more embodiments, the ionic conductivity of the first polymer may range from ≥ $10^{-2}$ S/cm to ≤ $10^{-3}$ S/cm.

A second polymer may have a glass transition temperature ($T_g$) different from a glass transition temperature ($T_g$) of the first polymer. The glass transition temperature ($T_g$) may be a temperature at which a polymer transitions from a glassy state to a rubbery state and may be one of important physical properties that influence hardness and flexibility of the polymer. For example, the glass transition temperature ($T_g$) of the first polymer may be higher than the glass transition temperature ($T_g$) of a second polymer which will be discussed herein. The glass transition temperature ($T_g$) may be measured through either a change in heat flow by using differential scanning calorimetry (DSC) or an analysis of weight change with temperature by using thermogravimetric analysis (TGA). According to one or more embodiments, the glass transition temperature ($T_g$) of the first polymer may range from ≥ 40 °C to ≤ 100 °C.

Specifically, the glass transition temperature may be measured using a Differential Scanning Calorimeter (DSC) such as TA Instruments Q2000 or Mettler Toledo DSC 3+.

The measurement is performed under a nitrogen ($N_2$) atmosphere with a heating rate of about 10 °C/min using a dried polymer sample.

The Tg value is determined from the heat-flow curve as the intersection point of the baseline shift or the inflection point corresponding to the change in slope.

In addition, the difference in Tg between the polymers may be further evaluated by Dynamic Mechanical Analysis (DMA), which is performed in a frequency range of 1 Hz-10 Hz and a temperature range of -80 °C to 150 °C. The Tg is defined as the intersection of the storage modulus and loss modulus curves or the maximum of the tan $\delta$ curve.

Optionally, Thermogravimetric Analysis (TGA) may be used to analyze weight changes with temperature to confirm the decomposition onset and physical transition near the Tg region.

The first polymer may be a mixed polymer containing a functional group whose ionic conductivity is excellent or suitable and may exhibit stable flexibility at high temperatures while maintaining high ionic conductivity,

For example, the first polymer may have a weight average molecular weight ($M_w$) of ≥ 20,000 g/mol to ≤ 2,500,000 g/mol or ≥ 50,000 g/mol to ≤ 1,500,000 g/mol.

In the present disclosure, the term "weight average molecular weight" may refer to a polystyrene equivalent value measured by gel filtration chromatography or gel permeation chromatography.

According to one or more embodiments, the first polymer may include at least one selected from among a first structural unit represented by Chemical Formula 1-1A or Chemical Formula 1-1B, a second structural unit represented by Chemical Formula 1-2, a third structural unit represented by Chemical Formula 1-3A or Chemical Formula 1-3B, and a fourth structural unit represented by Chemical Formula 1-4A or Chemical Formula 1-4B.

The first structural unit represented by Chemical Formula 1-1A or Chemical Formula 1-1B may be derived from a (meth)acrylic monomer or a salt thereof.

Chemical Formula 1-1A

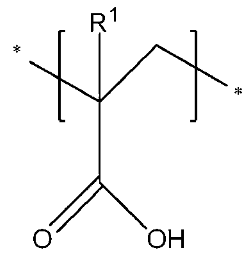

Chemical Formula 1-1B

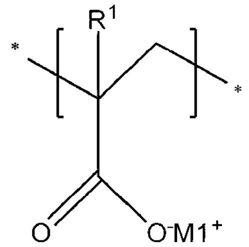

In Chemical Formulae 1-1A and 1-1B, $R^1$ may be identical to or different from each other and may each independently be a hydrogen atom or a C1-C20 alkyl group, and M1 may be an alkali metal.

For example, the first structural unit may be derived from an acrylic acid, and all of $R^1$ may be a hydrogen atom.

M1 may be derived from a metal ion in an electrolyte, and, for example, may be a lithium atom.

The second structural unit derived from Chemical Formula 1-2 may be derived from a (meth)acrylonitrile-based monomer.

Chemical Formula 1-2

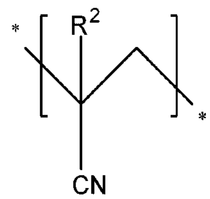

In Chemical Formula 1-2, $R^2$ may be a hydrogen atom or a C1-C20 alkyl group.

The second structural unit may be derived from acrylonitrile. In one or more embodiments, $R^2$ may be a hydrogen atom.

The third structural unit represented by Chemical Formula 1-3A or Chemical Formula 1-3B may be derived from a zwitterionic monomer.

Chemical Formula 1-3A

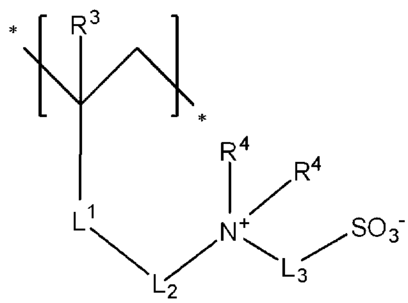

Chemical Formula 1-3B

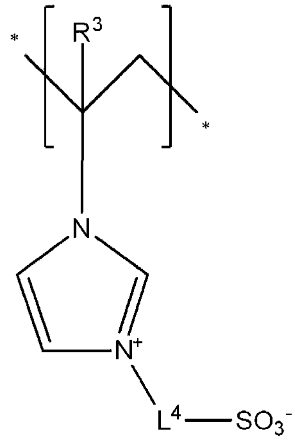

In Chemical Formulae 1-3A and 1-3B, $R^3$ may be identical to or different from each other and may each independently be a hydrogen atom or a C1-C20 alkyl group, $R^4$ may be identical to or different from each other and may each independently be a hydrogen atom or a C1-C20 alkyl group, $L^1$ may be *-(C=O)-$NR^4$-$CH_2$-* or *-(C=O)-O-*, and $L^2$, $L^3$, and $L^4$ may each independently be a single bond (e.g., a single covalent bond) or a C1-C20 alkylene group.

$R^3$ may be a methyl group if (e.g., when) the third structural unit is derived from sulfobetaine (SB) and represented by Chemical Formula 1-3A, $L^1$ may be identical to or different from each other and may each independently be *-(C=O)-$NR^3$-$CH_2$-* or *-(C=O)-O-*, and all of $L^2$ and $L^3$ may be an ethylene group.

$R^3$ may be a hydrogen atom if (e.g., when) the third structural unit is derived from vinylimidazolium sulfonate (IMS) and represented by Chemical Formula 1-3B, and L4 may be a butylene group.

The fourth structural unit represented by Chemical Formula 1-4A or Chemical Formula 1-4B may be derived from an alkylene glycol-based monomer or a salt thereof.

Chemical Formula 1-4A

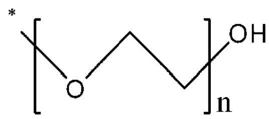

Chemical Formula 1-4B

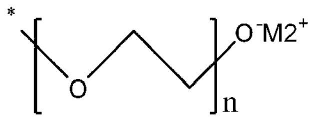

In Chemical Formulae 1-4A and 1-4B, M2 may be an alkali metal, and n may be an integer of 1 to 100.

For example, the fourth structural unit may be derived from ethylene glycol. In one or more embodiments, n may be 5 to 20 or 5 to 10.

M2 may be derived from a metal ion in an electrolyte, and, for example, may be a lithium atom.

If (e.g., when) the first polymer includes the first to third structural units, relative to the total 100 wt% (e.g., based on 100 wt%) of the first polymer, the first structural unit may be included in an amount of ≥ 30 wt% to ≤ 60 wt%, ≥45 wt% to ≤ 60 wt%, or ≥ 50 wt% to ≤ 60 wt%, the second structural unit may be included in an amount of ≥ 32 wt% to ≤ 55 wt%, ≥ 35 wt% to ≤ 55 wt%, or ≥35 wt% to ≤ 50 wt%, and the third structural unit may be included in an amount of ≥ 1 wt% to ≤ 15 wt%, ≥ 3 wt% to ≤ 15 wt%, or ≥ 5 wt% to ≤ 15 wt%. Within the foregoing ranges, the first to third structural units may be harmonized to provide advantages or benefits of high adhesion, excellent or suitable ionic conductivity, and low resistance (e.g., low electrical resistance).

If (e.g., when) the first polymer includes the first to fourth structural units, relative to the total 100 wt% (e.g., based on 100 wt%) of the first polymer, the first structural unit may be included in an amount of ≥ 30 wt% to ≤ 60 wt%, ≥45 wt% to ≤ 60 wt%, or ≥ 50 wt% to ≤ 60 wt%, the second structural unit may be included in an amount of ≥ 32 wt% to ≤ 55 wt%, ≥ 35 wt% to ≤ 55 wt%, or ≥ 35 wt% to ≤ 50 wt%, the third structural unit may be included in an amount of ≥ 1 wt% to ≤ 15 wt%, ≥ 3 wt% to

≤ 15 wt%, or ≥5 wt% to ≤ 15 wt%, and the fourth structural unit may be included in an amount of ≥ 0.1 wt% to ≤ 15 wt%, ≥ 1 wt% to ≤ 15 wt%, or ≥ 3 wt% to ≤ 10 wt%. In one or more embodiments, the fourth structural unit may contribute to further reducing resistance (e.g., electrical resistance) by increasing or enhancing ionic conductivity of the first polymer.

The first polymer may be included in an amount of ≥ 0.1 wt% to ≤ 15 wt% relative to the total 100 wt% (e.g., based on 100 wt%) of the first composite conductive material CCM1. If (e.g., when) the amount of the first polymer in the first composite conductive material CCM1 is greater than the foregoing range, there may be an increase in electrode internal resistance (e.g., internal electrical resistance) caused by side reactions. If (e.g., when) the amount of the first polymer in the first composite conductive material CCM1 is less than the foregoing range, a slight amount of the first polymer may not be evenly distributed.

According to one or more embodiments, the second active material CAM2 may be present in an amount of ≥ 90 wt% to ≤ 99.5 wt% relative to the total weight (e.g., based on 100 wt%) of the second active material layer ATL2. If (e.g., when) the second active material layer ATL2 satisfies the foregoing amount range of the second active material CAM2, it may be feasible to maximize or increase energy capacity and energy density of the rechargeable lithium batteries and at the same time (e.g., concurrently) to achieve easiness of electrode plate process.

According to one or more embodiments, the second active material layer ATL2 may not include one or both (e.g., simultaneously) of the binder BND and the conductive material CDM that are used in the first active material layer ATL1. For example, an amount of the binder BND or the conductive material CDM may be zero in the second active material layer ATL2.

According to one or more embodiments, the second active material layer ATL2 may include a slight amount of the binder BND and/or the conductive material CDM separated from the first composite conductive material CCM1. For example, in the second active material layer ATL2, the binder BND may be present in an amount of equal to or less than 0.1 wt%, and the conductive material CDM may be present in an amount of equal to or less than 0.1 wt%. Because the second active material layer ATL2 includes an extremely or substantially small amount of the binder BND and/or the conductive material CDM, it may be acceptable that the binder BND or the conductive material CDM is substantially omitted.

According to one or more embodiments, the first active composite conductive material CCM1 may be present in an amount of ≥ 0.1 wt% to ≤ 5 wt% relative to the total weight (e.g., based on 100 wt%) of the second active material layer ATL2. If (e.g., when) the amount of the first composite conductive material CCM1 in the second active material layer ATL2 is greater than the foregoing range, an electrode resistance (e.g., electrical resistance) may increase to reduce battery (e.g., rechargeable lithium battery) stability and battery (e.g., rechargeable lithium battery) performance. If (e.g., when) the second active material layer ATL2 does not include the first composite conductive material CCM1 or includes the first composite conductive material CCM1 whose amount is less than the foregoing range, it may be difficult to maximize or increase an effect of an improvement or enhancement in ionic conductivity.

The third active material layer ATL3 may be formed or provided to contact one surface of the second active material layer ATL2. The one surface of the second active material layer ATL2 may be a surface at which the second active material layer ATL2 is not in contact with the first active material layer ATL1.

The third active material layer ATL3 may be at an outermost location of the active material layer (see AML of FIG. 3) and may include materials that facilitate an easy migration of electrons.

The third active material layer ATL3 may include a third active material CAM3 and a second composite conductive material CCM2.

The third active material CAM3 may be substantially the same as the first active material CAM1 as described in one or more embodiments in the first active material layer ATL1. For example, the third active material CAM3 may include lithium composite oxide represented by Chemical Formula 2.

At a surface of the active material layer (see AML of FIG. 6), the second composite conductive material CCM2 may secure lithium ion paths without the occurrence of binder migration.

The second composite conductive material CCM2 may include a second carbon nanostructure and a second polymer that is physically and/or chemically bonded to a surface of the second carbon nanostructure.

As the second composite conductive material CCM2 is formed or composed of the second carbon nanostructure and the second polymer that are chemically bonded, the second carbon nanostructure may be satisfactorily or suitably dispersed without being aggregated. Thus, the second composite conductive material CCM2 may improve or enhance dispersibility and may form or provide a conductive (e.g., electrically conductive) path even with a small amount to achieve high capacity (e.g., high electrical capacity). In one or more embodiments, even if (e.g., when) an active (e.g., electrically active) material shrinks and expands resulting from charge and discharge during battery (e.g., rechargeable lithium battery) operation, there may be no occurrence of agglomeration caused by migration of the second carbon nanostructure. In one or more embodiments, the second carbon nanostructure may increase or enhance a tensile strength of the second polymer, and thus the second composite conductive material CCM2 may maintain a conductive (e.g., electrically conductive) path, thereby improving or enhancing a lifespan.

The second carbon nanostructure may be substantially the same as the first carbon nanostructure as described in one or more embodiments in the second active material layer ATL2. For example, the second carbon nanostructure may

include carbon nanotube (CNT). The carbon nanotube (CNT) may include a single-walled carbon nanotube (SWCNT) and/or a multi-walled carbon nanotube (MWCNT).

The second polymer may be an organic binder that dissolves in an organic solvent. The organic binder may be advantageous or beneficial to achieve one or more suitable characteristics, such as adhesion, tensile strength, and elasticity. Any suitable polymer capable of functioning as an organic binder may be used without limitation as the second polymer.

The second polymer may include an adhesive polymer. There may be no limitation on molecular weight of the adhesive polymer, but it may be necessary or desirable that the adhesive polymer possess a functional group, such as a hydroxyl group, a carboxyl group, and/or an amine group, and be compatible with an active (e.g., electrically active) material and other additives included in an electrode composition to ensure no issues arise during preparation of slurry. It may also be necessary or desirable that the adhesive polymer have stable or suitable electrochemical properties during charge and discharge of a rechargeable lithium battery.

The second polymer may include a functional group having high adhesion and may have different characteristics from characteristics of the first polymer.

For example, the second polymer may have an ionic conductivity different from an ionic conductivity of the first polymer. The ionic conductivity of the second polymer may be lower than the ionic conductivity of the first polymer. According to one or more embodiments, the ionic conductivity of the second polymer may range from $\geq 10^{-4}$ S/cm to $\leq 10^{-3}$ S/cm.

The second polymer may have a glass transition temperature ($T_g$) different from a glass transition temperature ($T_g$) of the first polymer. The glass transition temperature ($T_g$) of the second polymer may be lower than the glass transition temperature ($T_g$) of the first polymer. The second polymer may have high adhesion to have flexible characteristics even at low temperatures. Thus, the second polymer may have a glass transition temperature ($T_g$) relatively lower than a glass transition temperature ($T_g$) of the first polymer. According to one or more embodiments, the glass transition temperature ($T_g$) of the second polymer may range from ≥ 10 °C to ≤ 40 °C.

The second polymer may include polyvinyl alcohol (PVA), polyacrylonitrile (PAN), polyacrylic acid (PAA), polyethylene (PE), polyethylene glycol (PEG), polyimide (PI), polyacrylamide (PAM), polystyrene (PS), polyurethane (PU), polyvinyl butyral (PVB), polyvinylpyrrolidone (PVP), and/or a copolymer thereof. The second polymer may be used alone or in a mixture of two or more substances.

According to one or more embodiments, the second polymer may include at least one selected from a fifth structural unit represented by Chemical Formula 2-1 and a sixth structural unit represented by Chemical Formula 2-2.

Chemical Formula 2-1

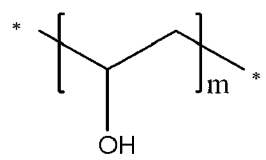

Chemical Formula 2-2

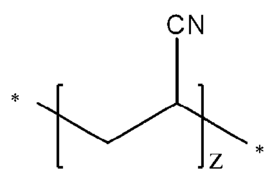

In Chemical Formulae 2-1 and 2-2, the subscripts m and z may be an integer of 1 to 100.

For example, the fifth structural unit may be derived from polyvinyl alcohol (PVA). For example, the fifth structural unit may be derived from polyacrylonitrile (PAN).

For example, the second polymer may include at least one selected from among a polyvinyl alcohol-polyacrylonitrile (PVA-PAN) copolymer, a polyvinyl alcohol-polyethylene glycol (PVA-PEG) copolymer, and a polyacrylic acid-polyacrylonitrile (PAA-PAN) copolymer.

The second polymer may be included in an amount of ≥ 0.1 wt% to ≤ 15 wt% relative to the total 100 wt% (e.g., based on 100 wt%) of the second composite conductive material CCM2. If (e.g., when) the amount of the second polymer in the second composite conductive material CCM2 is greater than the foregoing range, there may be an increase in

electrode internal resistance (e.g., internal electrical resistance) caused by side reactions. If (e.g., when) the amount of the second polymer in the second composite conductive material CCM2 is less than the foregoing range, a slight amount of the second polymer may not be evenly distributed.

According to one or more embodiments, the third positive electrode active material CAM3 may be present in an amount of ≥ 90 wt% to ≤ 99.5 wt% relative to the total weight (e.g., based on 100 wt%) of the third active material layer ATL3. If (e.g., when) the third active material layer ATL3 satisfies the foregoing amount range of the third active material CAM3, it may be feasible to maximize or increase energy capacity and energy density of the rechargeable lithium batteries and at the same time (e.g., concurrently) to achieve easiness of electrode plate process.

According to one or more embodiments, the third active material layer ATL3 may not include one selected from the binder BND and the conductive material CDM that are used in the first active material layer ATL1. For example, an amount of the binder BND or the conductive material CDM may be zero in the third active material layer ATL3.

According to one or more embodiments, the third active material layer ATL3 may include a slight amount of the binder BND or the conductive material CDM separated from the second composite conductive material CCM2. For example, in the third active material layer ATL3, the binder BND may be present in an amount of equal to or less than 0.1 wt%, and the conductive material CDM may be present in an amount of equal to or less than 0.1 wt%. Because the third active material layer ATL3 includes an extremely or substantially small amount of the binder BND or the conductive material CDM, it may be acceptable that the binder BND or the conductive material CDM is substantially omitted.

According to one or more embodiments, the second active composite conductive material CCM2 may be present in an amount of ≥ 0.1 wt% to ≤ 5 wt% relative to the total weight (e.g., based on 100 wt%) of the third active material layer ATL3. If (e.g., when) the amount of the second composite conductive material CCM2 in the third active material layer ATL3 is greater than the foregoing range, an electrode resistance (e.g., electrical resistance) may increase to reduce battery (e.g., rechargeable lithium battery) stability and battery (e.g., rechargeable lithium battery) performance. If (e.g., when) the third active material layer ATL3 does not include the second composite conductive material CCM2 or includes the second composite conductive material CCM2 whose amount is less than the foregoing range, it may be difficult to maximize or increase an effect of an improvement or enhancement in adhesion.

The binder BND and the conductive material CDM in the first active material layer ATL1 may constitute additives of the first active material layer ATL1. The second active material layer ATL2 may include the first composite conductive material CCM1 that corresponds to the role of an additive within the first active material layer ATL1, and the third active material layer ATL3 may include the second composite conductive material CCM2 that corresponds to the role of an additive within the first active material layer ATL1.

An additive amount in the first active material layer ATL1 may be greater than an amount of the first composite conductive material CCM1 in the second active material layer ATL2 or an amount of the second composite conductive material CCM2 in the third active material layer ATL3. For example, because the composite conductive materials CCM1 and CCM2 include a structure in which a carbon nanostructure and a polymer are densely bonded, even small amounts of the composite conductive materials CCM1 and CCM2 may maximize or increase conductivity (e.g., electrical conductivity) and adhesion.

According to one or more embodiments, an additive amount in the first active material layer ATL1 may be ≥ 1 to 3 times greater than an amount of the first composite conductive material CCM1 in the second active material layer ATL2 and ≥ 1 to 3 times greater than an amount of second composite conductive material CCM2 in the third active material layer ATL3.

According to one or more embodiments, a porosity of each of the second active material layer ATL2 and the third active material layer ATL3 may be higher than a porosity of the first active material layer ATL1. For example, the porosity of the first active material layer ATL1 may range from ≥ 10% to ≤ 30%, the porosity of the second active material layer ATL2 may range from ≥ 15% to ≤ 35%, and the porosity of the third active material layer ATL3 may range from ≥ 15% to ≤ 40%.

The porosity of the active material layer may be determined by a volume-based density method or by mercury intrusion porosimetry.

The porosity (%) is calculated according to Equation (2) based on the total volume (V) and solid volume (Vs):

$$\text{Porosity (\%)} = [(V - Vs) / V] \times 100 \qquad \text{[Equation 2]}$$

where Vs is the solid volume calculated from the measured mass and theoretical density. Alternatively, the cumulative pore volume obtained by mercury intrusion porosimetry may be used.

Each of the second active material layer ATL2 and the third active material layer ATL3 may use a corresponding one of the composite conductive materials CCM1 and CCM2, in each of which a polymer is integrally with a carbon nanostructure, instead of the binder BND and the conductive material CDM, thereby having a relatively higher porosity than that of the first active material layer ATL1.

Therefore, because a reduced path for lithium ions is provided in the second active material layer ATL2 and the

third active material layer ATL3, lithium ions may easily migrate in the second active material layer ATL2 and the third active material layer ATL3. For example, the second active material layer ATL2 and the third active material layer ATL3 may improve or enhance in ionic conductivity.

In one or more embodiments, because the first active material layer ATL1 includes the binder BND uniformly (e.g., substantially uniformly) dispersed therein, the first active material layer ATL1 may exhibit a relatively larger adhesive force than an adhesive force of each of the second active material layer ATL2 and the third active material layer ATL3 and may have a relatively lower porosity than a porosity of each of the second active material layer ATL2 and the third active material layer ATL3.

According to one or more embodiments, the second active material layer ATL2 may use the first composite conductive material CCM1 that includes the first polymer containing a functional group having excellent or suitable ionic properties, thereby having both (e.g., simultaneously) of thermal stability and high ionic conductivity. For example, the second active material layer ATL2 may exhibit superior or more suitable thermal stability and ionic conductivity to thermal stability and ionic conductivity of the first active material layer ATL1 including the binder BND having excellent or suitable adhesive force.

According to one or more embodiments, the third active material layer ATL3 may use the second composite conductive material CCM2 in which the second carbon nanostructure is integrally with the second polymer that contains a functional group having excellent or suitable adhesion, thereby securing both (e.g., simultaneously) of adhesion and lithium ion paths at a surface of the active material layer AML. The third active material layer ATL3 may exhibit excellent or suitable ionic conductivity compared to the first active material layer ATL1 including only the binder BND.

The electrode 10 or 20 according to one or more embodiments of the present disclosure may include the active material layer AML that includes the first active material layer ATL including the binder BND, the second active material layer ATL2 including the first composite conductive material CCM1, and the third active material layer ATL3 including the second active material layer ATL2 and the second composite conductive material CCM2, which a first active material layer ATL1, a second active material layer ATL2, and a third active material layer ATL3 are sequentially stacked. This stack structure may secure lithium ion paths from intermediate to surface of the active material layer AML, while exhibiting a sufficient or suitable adhesive force between the active material layer AML and the electrode current collector COL. For example, as the third active material layer ATL3 is stacked on the second active material layer ATL2, the second active material layer ATL2 having excellent or suitable ionic conductivity may increase a reaction rate to improve or enhance electrochemical performance of the electrode 10 or 20, and the third active material layer ATL3 having superior adhesion may increase or enhance mechanical stability and durability of the electrode 10 or 20.

However, if (e.g., when) the second active material layer ATL2 is stacked on the third active material layer ATL3, an electrode may exhibit reduced mechanical stability and durability compared to the electrode 10 or 20 according to one or more embodiments, and thus there may be a problem of separation in the active material layer AML during charge and discharge.

FIG. 8 is an enlarged view illustrating an electrode according to one or more embodiments of the present disclosure. FIG. 9 is an enlarged view illustrating the section N of FIG. 8. In the embodiment that follows, a more detailed description of aspects and features of embodiments of the present disclosure repetitive to those as described in one or more embodiments with reference to FIGS. 6 and 7 may not be provided, and a difference thereof will be discussed in more detail.

Referring to FIGS. 8 and 9, an electrode 10' or 20' according to one or more embodiments of the present disclosure may include a single-layered active material layer AML'.

The electrode 10' or 20' may include an electrode current collector COL' and an active material layer AML' on the electrode current collector COL'.

In one or more embodiments, aluminum (Al) may be used as the electrode current collector COL', but embodiments of the present disclosure are not limited thereto.

The active material layer AML' may be formed or provided to contact one surface of the electrode current collector COL'. The one surface of the active material layer AML' may be a surface at which the active material layer AML' is in contact with the electrode current collector COL'. For example, in the electrode 10' or 20', the electrode current collector COL' and the active material layer AML' may be sequentially stacked.

The active material layer AML' may be provided on the electrode current collector COL' and may have a thickness TKL'. For example, the thickness TKL' of the active material layer AML' may range from $\geq 10\ \mu m$ to $\leq 170\ \mu m$.

Referring to FIG. 9, the active material layer AML' may include an active material CAM', a first composite conductive material CCM1', a second composite conductive material CCM2', a binder BND', and a conductive material CDM'.

The active material CAM' may be substantially the same as the first active material CAM1 or the second active material CAM2 as described in one or more embodiments. The binder BND' may be substantially the same as the binder BND as described in one or more embodiments. The conductive material CDM' may be substantially the same as the conductive material CDM as described in one or more embodiments. The first composite conductive material CCM1' and

the second composite conductive material CCM2' may be respectively substantially the same as the first composite conductive material CCM1 and the second composite conductive material CCM2 as described in one or more embodiments.

According to one or more embodiments, the active material CAM' may be present in an amount of ≥ 90 wt% to ≤ 99.5 wt% relative to the total weight (e.g., based on 100 wt%) of the active material layer AML'. According to one or more embodiments, the binder BND' may be present in an amount of ≥ 0.1 wt% to ≤ 5 wt% relative to the total weight (e.g., based on 100 wt%) of the active material layer AML'. According to one or more embodiments, the conductive material CDM' may be present in an amount of ≥ 0.1 wt% to ≤ 5 wt% relative to the total weight (e.g., based on 100 wt%) of the active material layer AML'. According to one or more embodiments, each of the first composite conductive material CCM1' and the second composite conductive material CCM2' may be present in an amount of ≥ 0.1 wt% to ≤ 5 wt% relative to the total weight (e.g., based on 100 wt%) of the active material layer AML'.

If (e.g., when) the active material layer AML' satisfies the foregoing amount ranges of the active material CAM', the binder BND', the conductive material CDM', the first composite conductive material CCM1', and the second composite conductive material CCM2', it may be feasible to maximize or increase energy capacity and energy density of the rechargeable lithium batteries.

The active material layer AML' may include a first part RG1 adjacent to the electrode current collector COL', a second part RG2 adjacent to a surface of the active material layer AML', and a third part RG3 disposed or provided between the first part RG1 and the second part RG2.

For example, the first part RG1 may be a region where the active material layer AML' is in contact with the electrode current collector COL'. The second part RG2 may be a region where the active material layer AML' is not in contact with the electrode current collector COL'. The third part RG3 may be a region between the first part RG1 and the second part RG2. The third part RG3 may be on a center of the active material layer AML' if (e.g., when) viewed in a third direction D3.

The first part RG1 of the active material layer AML' may include the active material CAM', the binder BND', and the conductive material CDM'. The second part RG2 of the active material layer AML' may include the active material CAM' and the second composite conductive material CCM2'. The third part RG3 of the active material layer AML' may include the active material CAM' and the first composite conductive material CCM1'.

For example, the first composite conductive material CCM1' may be included only in the third part RG3 of the active material layer AML', and the second composite conductive material CCM2' may be included only in the second part RG2 of the active material layer AML'.

According to one or more embodiments, in the third part RG3, the active material CAM' and the first composite conductive material CCM1' may be included in a weight ratio of ≥ 95:5 to ≤ 99:1, and in the second part RG2, the active material CAM' and the second composite conductive material CCM2' may be included in a weight ratio of ≥ 95:5 to ≤ 99:1.

If (e.g., when) the composite conductive materials CCM1' and CCM2' are not included in the second and third parts RG2 and RG3 or if (e.g., when) amounts of the composite conductive materials CCM1' and CCM2' are greater than the foregoing ranges, it may be difficult to achieve an effect of an improvement or enhancement in ionic conductivity and adhesion.

If (e.g., when) the electrode 10' or 20' is present as a single-layered structure of the active material layer AML', the second composite conductive material CCM2' may be added to the second part RG2 and the first composite conductive material CCM1' may be added to the third part RG3, thereby increasing or enhancing adhesion between the electrode current collector COL' and the active material layer AML', improving or enhancing ionic conductivity in the active material layer AML', and securing lithium ion paths at the surface of the active material layer AML'.

**Manufacture of Electrode**

FIG. 10 is a diagram illustrating a method of manufacturing an electrode according to one or more embodiments of the present disclosure.

Referring to FIG. 10, a method of manufacturing an electrode according to one or more embodiments of the present disclosure may include providing an electrode current collector COL, forming or providing a first active material layer ATL1 on the electrode current collector COL, forming or providing a second active material layer ATL2 on the first active material layer ATL1, and forming or providing a third active material layer ATL3 on the second active material layer ATL2.

In one or more embodiments, the first active material layer ATL1 may include a first active material CAM1, a binder BND, and a conductive material CDM that are illustrated in FIG. 7. In one or more embodiments, the second active material layer ATL2 may include a second active material CAM2 and a first composite conductive material CCM1 that are illustrated in FIG. 7. In one or more embodiments, the second active material layer ATL2 may include a second active material CAM2 and a first composite conductive material CCM1 that are illustrated in FIG. 7.

The electrode current collector COL, the first active material layer ATL1, the second active material layer ATL2,

and the third active material layer ATL3 may be substantially the same as those of the electrode 10 or 20 according to one or more embodiments, and a more detailed description thereof may not be provided herein.

The first composite conductive material CCM1 may include a first carbon nanostructure and a first polymer that is physically and/or chemically bonded to a surface of the first carbon nanostructure.

The second composite conductive material CCM2 may include a second carbon nanostructure and a second polymer that is physically and/or chemically bonded to a surface of the second carbon nanostructure.

Each of the first carbon nanostructure and the second carbon nanostructure may include at least one selected from among carbon nanotube (CNT), carbon nanofiber (CNF), polyacetylene, graphene nanoribbon (GNR), graphene sheet, fullerene, nanodiamond, mesoporous carbon, amorphous (e.g., non-crystalline) carbon, carbon quantum dot, nanoporous carbon, carbon black, nanohorn, and vitreous carbon.

The first polymer may be different from the second polymer and may have an ionic conductivity higher than an ionic conductivity of the second polymer.

The first polymer may include at least one selected from among the first to fourth structural units as described in one or more embodiments. For example, the first polymer may be a copolymer obtained by combining the first to fourth structural units.

For example, the first structural unit may be derived from an acrylic acid. The second structural unit may be derived from acrylonitrile. The third structural unit may be derived from sulfobetaine (SB) and/or vinylimidazolium sulfonate (IMS). The fourth structural unit may be derived from ethylene glycol.

The second polymer may include at least one selected from the fifth structural unit and the sixth structural unit as described in one or more embodiments.

The second polymer may include one or more selected from among the fifth structural unit, the sixth structural unit, and a copolymer thereof. For example, the fifth structural unit may be derived from polyvinyl alcohol (PVA). The fifth structural unit may be derived from polyacrylonitrile (PAN).

According to one or more embodiments, the second polymer may include at least one selected from among a polyvinyl alcohol-polyacrylonitrile (PVA-PAN) copolymer, a polyvinyl alcohol-polyethylene glycol (PVA-PEG) copolymer, and a polyacrylic acid-polyacrylonitrile (PAA-PAN) copolymer.

The formation of the first composite conductive material CCM1 may include introducing a functional group to a surface of the first carbon nanostructure, preparing a first mixture by mixing the first polymer and the first carbon nanostructure that has a functional group, and agitating and thermally treating the first mixture.

The formation of the second composite conductive material CCM2 may include introducing a functional group to a surface of the second carbon nanostructure, preparing a second mixture by mixing the second polymer and the second carbon nanostructure that has a functional group, and agitating and thermally treating the second mixture.

FIG. 11 is a schematic diagram illustrating a method of preparing a composite conductive (e.g., electrically conductive) material chemically bonded to a polymer according to the present disclosure. A method of preparing a composite conductive (e.g., electrically conductive) material will be discussed in more detail herein with reference to FIG. 11.

For chemical modification, a pretreatment process may be performed in which a functional group, such as a carboxyl group (-COOH) or a hydroxyl group (-OH), is introduced to the surface of each of the first carbon nanostructure and the second carbon nanostructure.

The introduction of the functional group may include a pretreatment process that uses at least one selected from among a wet treatment using a strong acid, a plasma treatment, and a dry treatment using vacuum ultraviolet irradiation.

The formation of the first mixture may include mixing the first polymer and the first carbon nanostructure that has a functional group. For example, the prepared first mixture may include the first carbon nanostructure added to a solvent containing the first polymer. The prepared first mixture may cause a chemical reaction to induce a chemical bond.

The formation of the second mixture may include mixing the second polymer and the second carbon nanostructure that has a functional group. For example, the prepared second mixture may include the second carbon nanostructure added to a solvent containing the second polymer. The prepared second mixture may cause a chemical reaction to induce a chemical bond.

Each of the first and second mixtures may undergo agitation and thermal treatment for chemical reaction. For example, the agitating and thermal treatment may be performed at a temperature ranging from ≥ 60 °C to ≤ 90 °C.

For example, each of the first and second mixtures may further include a cross linker and a catalyst for activation of chemical reaction.

The first mixture that has undergone the reaction may be dried to eventually prepare a first composite conductive material CCM1 in which the first carbon nanostructure and the first polymer are chemically bonded, and the second mixture that has undergone the reaction may be dried to eventually prepare a second composite conductive material CCM2 in which the second carbon nanostructure and the second polymer are chemically bonded.

According to one or more embodiments, the first composite conductive material CCM1 may be prepared by a self-assembly in which the first polymer and the first carbon nanostructure having a functional group are mixed to form or

provide a first mixture and then the first mixture is evaporated or gelled to induce natural arrangement of the first carbon nanostructure and the first polymer. The first composite conductive material CCM1 prepared by the self-assembly may have a specific structure in which the first carbon nanostructure is arranged or provided between first polymer chains. According to one or more embodiments, the second composite conductive material CCM2 may be prepared by a self-assembly in which the second polymer and the second carbon nanostructure having a functional group are mixed to form or provide a second mixture and then the second mixture is evaporated or gelled to induce natural arrangement of the second carbon nanostructure and the second polymer. The second composite conductive material CCM2 prepared by the self-assembly may have a specific structure in which the second carbon nanostructure is arranged or provided between second polymer chains.

If (e.g., when) a polymer and a carbon nanostructure having a functional group are simply mixed to be used as a composite conductive (e.g., electrically conductive) material, it may be difficult to induce a chemical bond between the carbon nanostructure and the polymer during manufacture of an electrode, and even if (e.g., when) a physical bond is induced between the carbon nanostructure and the polymer, the physical bond may have a bonding force less than a bonding force of the chemical bond, which may result in a reduction in effect of suppressing agglomeration (or reducing a degree or occurrence of agglomeration) of the carbon nanostructure. The expression of physical bond may indicate that components are simply mixed without changes in chemical properties of each component.

According to one or more embodiments, as a chemical bond is formed between the carbon nanostructure and the polymer in the composite conductive materials CCM1 and CCM2, the carbon nanostructure may exhibit improved or enhanced dispersibility to form or provide a conductive (e.g., electrically conductive) path even with a small amount of the composite conductive materials CCM1 and CCM2. As a result, an amount of active (e.g., electrically active) material in an active (e.g., electrically active) material layer may be increased to achieve a high capacity (e.g., high electrical capacity). In one or more embodiments, even during expansion and contraction of the active material caused by charge and discharge if (e.g., when) a rechargeable lithium battery is operated, conductive (e.g., electrically conductive) paths may be maintained without agglomeration of the carbon nanostructure to improve or enhance lifespan characteristics of the rechargeable lithium battery.

According to one or more embodiments, at least one selected from among the formation of the first active material layer ATL1, the formation of the second active material layer ATL2, and the formation of the third active material layer ATL3 may include performing a wet process and/or a dry process. In one or more embodiments, the first active material layer ATL1, the second active material layer ATL2, and the third active material layer ATL3 may be formed or provided in a wet process and/or a dry process. However, embodiments of the present disclosure are not limited thereto.

The wet process may be performed such that the active material CAM1, CAM2, or CAM3, the binder BND, the conductive material CDM, and the composite conductive material CCM1 or CCM2 are mixed in a solvent to prepare an electrode mixture, and such that the electrode mixture is coated, dried, and pressed on an electrode current collector COL. The solvent in slurry may be a solvent that is generally available or generally used in the art, and, for example, may include at least one selected from among dimethyl sulfoxide (DMSO), isopropyl alcohol, N-methylpyrrolidone (NMP), acetone, water, and a combination thereof.

The dry process may be performed such that the active material CAM1, CAM2, or CAM3, the binder BND, the conductive material CDM, and the composite conductive material CCM1 or CCM2 are mixed in a solvent to prepare an electrode mixture, and such that the electrode mixture is disposed or provided and pressed on an electrode current collector COL.

Afterwards, a positive electrode 10 or a negative electrode 20 manufactured through the procedure as described in one or more embodiments may sequentially undergo a roll pressing process, a slitting process, and/or a notching process. The positive electrode 10, a separator 30, and the negative electrode 20 may be stacked, and then an electrolyte ELL may be provided to fabricate a rechargeable lithium battery according to the present disclosure.

The following will describe Embodiments and comparative examples ("Comparative(s)") of the present disclosure. The following Embodiments, however, are merely exemplary, and embodiments of the present disclosure are not limited thereto.

**Embodiment 1: Electrode Including Tri-layered Active Material Layer**

**1) Preparation of First Polymer**

An azo compound initiator and water were mixed with respect to 100 parts by weight of a monomer mixture including 51 wt% of acrylic acid (AA), 39 wt% of acrylonitrile (AN), 5 wt% of sulfobetaine (SB), and 5 wt% of alkylene glycol (ethylene glycol repeating number (n) = 9). The initiator was used in 0.2 parts by weight relative to (e.g., based on) 100 parts by weight of the monomer mixture.

The obtained mixture was emulsion-polymerized to prepare a solution containing a first polymer including a copolymer having a first structural unit derived from acrylic acid, a second structural unit derived from acrylonitrile, a third

structural unit derived from sulfobetaine, and a fourth structural unit (ethylene glycol repeating number (n) = 8) derived from ethylene glycol. The prepared first polymer was a PAA-AN-SB-PEG copolymer having a weight average molecular weight of 720,500 g/mol.

### 2) Preparation of First Composite Conductive Material

2 g of multi-walled carbon nanotube (MWCNT) of about 1 nm in diameter and about 25 μm in length was pretreated at 40 °C for 24 hours using 300 mL of a 20 wt% nitric acid solution. After the treated 1 g of CNT was immersed in 200 mL of a solution prepared by mixing concentrated sulfuric acid and concentrated nitric acid in a 3:1 (v/v%) ratio, the mixture was subjected to ultrasonic treatment for 3 hours at room temperature and then agitated at 70 °C for 6 hours. Thereafter, the acid solution adhered to the CNT was thoroughly removed through filtration and multiple washes with pure water, and then the CNT was dried in a vacuum oven at 80 °C for 24 hours to produce CNT to which a carboxyl group (-COOH) was introduced.

3 g of the prepared first polymer and 27 g of anhydrous dimethylacetamide (DMAc) were mixed in a reaction vessel, and the mixture was agitated and heated under a nitrogen atmosphere at 100 °C for 6 hours to completely dissolve the first polymer in DMAc.

After the reaction vessel was cooled to room temperature, 30 g of carboxylated CNT was added, and the mixture was subjected to ultrasonic treatment for 10 minutes and then agitated for 1 hour. Subsequently, a temperature of the reaction vessel was raised, and the mixture was agitated at 90 °C for 24 hours. After the reaction was completed, the solution in the reaction vessel was poured into 200 mL of an ethyl alcohol solution to precipitate reaction products, and then filtered, washed, and dried to prepare a first composite conductive (e.g., electrically conductive) material in which the first polymer was bonded to a surface of CNT.

### 3) Preparation of Second Composite Conductive Material

2 g of multi-walled carbon nanotube (MWCNT) of about 1 nm in diameter and about 25 μm in length was pretreated at 40 °C for 24 hours using 300 mL of a 20 wt% nitric acid solution. After the treated 1 g of CNT was immersed in 200 mL of a solution prepared by mixing concentrated sulfuric acid and concentrated nitric acid in a 3:1 (v/v%) ratio, the mixture was subjected to ultrasonic treatment for 3 hours at room temperature and then agitated at 70 °C for 6 hours. Thereafter, the acid solution adhered to the CNT was thoroughly removed through filtration and multiple washes with pure water, and then the CNT was dried in a vacuum oven at 80 °C for 24 hours to produce CNT to which a carboxyl group (-COOH) was introduced.

A polyvinyl alcohol-polyacrylonitrile (PVA-PAN) copolymer was prepared as a second polymer.

3 g of the second polymer and 27 g of anhydrous dimethylacetamide (DMAc) were mixed in a reaction vessel, and the mixture was agitated and heated under a nitrogen atmosphere at 100 °C for 6 hours to completely dissolve the second polymer in DMAc.

After the reaction vessel was cooled to room temperature, 30 g of carboxylated CNT was added, and the mixture was subjected to ultrasonic treatment for 10 minutes and then agitated for 1 hour. Subsequently, a temperature of the reaction vessel was raised, and the mixture was agitated at 90 °C for 24 hours. After the reaction was completed, the solution in the reaction vessel was poured into 200 mL of an ethyl alcohol solution to precipitate reaction products, and then filtered, washed, and dried to prepare a second composite conductive (e.g., electrically conductive) material in which the second polymer was bonded to a surface of CNT.

### 4) Preparation of Positive Electrode Slurry

A first active (e.g., electrically active) material slurry was prepared by dispersing a positive electrode active (e.g., electrically active) material, a conductive (e.g., electrically conductive) material, and a binder in a weight ratio of 100:0.2:0.9 in N-methylpyrrolidone.

A second active (e.g., electrically active) material slurry was prepared by dispersing the positive electrode active material and the prepared first composite conductive material in a weight ratio of 100:1 in N-methylpyrrolidone.

A third active (e.g., electrically active) material slurry was prepared by dispersing the positive electrode active material and the prepared second composite conductive material in a weight ratio of 100:1 in N-methylpyrrolidone.

In Embodiment 1, $LiNiCoAlO_2$ was used as the positive electrode active material, carbon nanotube (CNT) was used as the conductive material, and polyvinylidenefluoride (PVdF) was used as the binder.

### 5) Manufacture of Positive Electrode

The prepared first active material slurry was coated and dried on a positive electrode current collector, or an

aluminum (Al) foil of 12 μm in thickness, to form or provide a first active (e.g., electrically active) material layer of about 20 μm in thickness. The prepared second active material slurry was coated and dried on the first active material layer to form or provide a second active (e.g., electrically active) material layer of about 20 μm in thickness. The prepared third active material slurry was coated and dried on the second active material layer to form or provide a third active (e.g., electrically active) material layer of about 20 μm in thickness.

A roll pressing was performed to manufacture a positive electrode in which the aluminum current collector, the first active material layer, the second active material layer, and the third active material layer were sequentially stacked.

**6) Fabrication of Rechargeable Lithium Battery**

98 wt% of a negative electrode active (e.g., electrically active) material in which graphite and silicon composite were mixed in a weight ratio of 92:8, 1 wt% of a styrene-butadiene rubber (SBR), and 1 wt% of carboxymethylcellulose (CMC) were mixed and then added to distilled water, and a mechanical agitator was utilized to stir the mixture for 60 minutes to prepare a negative electrode active (e.g., electrically active) material slurry. A doctor blade was utilized to coat the slurry of 60 μm in thickness was coated on a copper current collector of 10 μm in thickness, dried in a hot-air drier at 100 °C for 0.5 hours, dried again at 120 °C for 4 hours under a vacuum condition, and then roll-pressed to manufacture a negative electrode.

1.15 M of $LiPF_6$ was dissolved in a non-aqueous (e.g., water-insoluble) organic solvent containing ethylene carbonate (EC), ethyl methyl carbonate (EMC), and dimethyl carbonate (DMC) mixed in a volume ratio of 20:40:40 to prepare an electrolyte.

The positive electrode, the negative electrode, and a polyethylene separator of 16 μm in thickness were assembled to manufacture an electrode assembly, and the electrolyte was introduced to fabricate a rechargeable lithium battery.

**Embodiment 2**

A positive electrode and a rechargeable lithium battery were fabricated in substantially the same method as in Embodiment 1, except that the PAA-AN-SB-PEG copolymer was replaced with a PAA-AN-SB copolymer as the first polymer when the first composite conductive (e.g., electrically conductive) material was prepared.

For example, the PAA-AN-SB copolymer was prepared by the following method.

An azo compound initiator and water were mixed with respect to 100 parts by weight of a monomer mixture including 50 wt% of acrylic acid (AA), 40 wt% of acrylonitrile (AN), and 10 wt% of sulfobetaine (SB). The initiator was used in 0.2 parts by weight relative to 100 parts (e.g., based on 100 parts) by weight of the monomer mixture. The obtained mixture was emulsion-polymerized to prepare a PAA-AN-SB copolymer having a first structural unit derived from acrylic acid, a second structural unit derived from acrylonitrile, and a third structural unit derived from sulfobetaine.

**Embodiment 3**

A positive electrode and a rechargeable lithium battery were fabricated in substantially the same method as in Embodiment 1, except that the PVA-PAN copolymer was replaced with a polyacrylic acid-polyacrylonitrile (PAA-PAN) copolymer as the second polymer when the second composite conductive (e.g., electrically conductive) material was prepared.

**Comparative 1: Positive Electrode Including Single-layered Active Material Layer**

A first active (e.g., electrically active) material slurry was prepared by dispersing a positive electrode active (e.g., electrically active) material, a conductive (e.g., electrically conductive) material, and a binder in a weight ratio of 100:0.2:0.9 in N-methylpyrrolidone.

In Comparative 1, $LiNiCoAlO_2$ was used as the positive electrode active material, carbon nanotube (CNT) was used as the conductive (e.g., electrically conductive) material, and polyvinylidenefluoride (PVdF) was used as the binder.

The prepared first active material slurry was coated and dried on a positive electrode current collector, or an aluminum (Al) foil of 12 μm in thickness, to form or provide a first active (e.g., electrically active) material layer of about 20 μm in thickness. A roll pressing was performed to manufacture a positive electrode in which the aluminum current collector and the first active material layer were sequentially stacked.

Substantially the same method as in Embodiment 1 was employed such that the positive electrode manufactured in Comparative 1 was used to fabricate a rechargeable lithium battery.

**Comparative 2: Positive Electrode Including Single-layered Active Material Layer**

A positive electrode and a rechargeable lithium battery were fabricated in substantially the same method as in Comparative 1, except that the positive electrode active material, the first composite conductive (e.g., electrically conductive) material, and the second composite conductive (e.g., electrically conductive) material were mixed in a weight ratio of 100:1:1 as a composition of the first active material slurry when the positive electrode was manufactured. Comparative 2 used the first composite conductive (e.g., electrically conductive) material and the second composite conductive (e.g., electrically conductive) material substantially the same as those used in Embodiment 1.

**Comparative 3: Positive Electrode Including Bi-layered Active Material Layer**

The first active material slurry prepared in Embodiment 1 was coated and dried on a positive electrode current collector, or an aluminum (Al) foil of 12 μm in thickness, to form or provide a first active (e.g., electrically active) material layer of about 20 μm in thickness. The second active material slurry prepared in Embodiment 1 was coated and dried on the first active material layer to form or provide a second active (e.g., electrically active) material layer of about 20 μm in thickness.

A roll pressing was performed to manufacture a positive electrode in which the aluminum current collector, the first active material layer, and the second active material layer were sequentially stacked.

Substantially the same method as in Embodiment 1 was employed such that the positive electrode manufactured in Comparative 3 was used to fabricate a rechargeable lithium battery.

**Comparative 4: Positive Electrode Including Tri-layered Active Material Layer with Switched Positions of First and Second Composite Conductive Materials**

A positive electrode and a rechargeable lithium battery were fabricated in substantially the same method as in Embodiment 1, except that the positive electrode active material, the conductive (e.g., electrically conductive) material, and the binder were mixed in a weight ratio of 100:0.9:0.2 as a composition of the first active material slurry, the positive electrode active material and the second composite conductive (e.g., electrically conductive) material were mixed in a weight ratio of 100:1 as a composition of the second active material slurry, and the positive electrode active material and the first composite conductive material were mixed in a weight ratio of 100:1 as a composition of the third active material slurry when the positive electrode was manufactured. Comparative 4 used the first composite conductive material and the second composite conductive material substantially the same as those used in Embodiment 1.

Table 1 lists compositions of the positive electrodes according to Embodiments 1 to 3 and Comparatives 1 to 4.

Table 1

| Category | | Amount of $LiNiCoAlO_2$ (wt%) | Amount of CNT (wt%) | Amount of PVdF (wt%) | Amount of composite conductive material (wt%) |
|---|---|---|---|---|---|
| Embodiment 1 | 1st active material layer | 100 | 0.2 | 0.9 | - |
| | 2nd active material layer | 100 | - | - | 1 (CNT/PAA-AN-SB-PEG) |
| | 3rd active material layer | 100 | - | - | 1 (CNT/PVA-PAN) |
| Embodiment 2 | 1st active material layer | 100 | 0.2 | 0.9 | - |
| | 2nd active material layer | 100 | - | - | 1 (CNT/PAA-AN-SB) |
| | 3rd active material layer | 100 | - | - | 1 (CNT/PVA-PAN) |
| Embodiment 3 | 1st active material layer | 100 | 0.2 | 0.9 | - |
| | 2nd active material layer | 100 | - | - | 1 (CNT/PAA-AN-SB-PEG) |
| | 3rd active material layer | 100 | - | - | 1 (CNT/PAA-PAN) |
| Comparative 1 | 1st active material layer | 100 | 0.2 | 0.9 | - |
| | 2nd active material layer | | | | |
| | 3rd active material layer | | | | |

(continued)

| Category | | Amount of $LiNiCoAlO_2$ (wt%) | Amount of CNT (wt%) | Amount of PVdF (wt%) | Amount of composite conductive material (wt%) |
|---|---|---|---|---|---|
| Comparative 2 | 1st active material layer | 100 | - | - | 1 (CNT/PAA-AN-SB-PEG)<br>1 (CNT/PVA-PAN) |
| | 2nd active material layer | - | - | - | - |
| | 3rd active material layer | | | | |
| Comparative 3 | 1st active material layer | 100 | 0.2 | 0.9 | - |
| | 2nd active material layer | 100 | - | - | 1 (CNT/PAA-AN-SB-PEG) |
| | 3rd active material layer | - | - | - | - |
| Comparative 4 | 1st active material layer | 100 | 0.9 | 0.2 | - |
| | 2nd active material layer | 100 | - | - | 1 (CNT/PVA-PAN) |
| | 3rd active material layer | 100 | - | - | 1 (CNT/PAA-AN-SB-PEG) |

**Evaluation 1: Structure of Composite Conductive Material**

The composite conductive materials prepared in Embodiment 1 were captured by a scanning electron microscope (SEM).

FIG. 12 is a scanning electron microscope (SEM) image of the first composite conductive material prepared in Embodiment 1.

Referring to FIG. 12, it may be ascertained that, when the first composite conductive material prepared in Embodiment 1 is observed by a scanning electron microscope (SEM), the first polymer is within a range of 500 nm from a surface of the carbon nanostructure.

Likewise, it may be ascertained that, when the second composite conductive material prepared in Embodiment 1 is observed by a scanning electron microscope (SEM), the second polymer is within a range of 500 nm from a surface of the carbon nanostructure.

**Evaluation 2: Adhesive Force**

The peel strength of the positive electrodes manufactured in the Embodiments 1 to 3 and Comparatives 1 to 4 was measured using a method in accordance with ASTM D3330. A universal testing machine (UTM, Instron 3345) was used as a measurement instrument.

For example, positive electrode plates having active material layers on opposite sides of the current collectors prepared in Embodiments 1 to 3 and Comparatives 1 to 4 were each cut into to prepare twenty samples each having a size of 25 mm × 150 mm. At room temperature, after an adhesive was coated on a glass substrate and the positive electrode plate was adhered to and roll-pressed against the adhesive, one end of the positive electrode plate was folded at 180° and then a force applied to the sample was measured while pulling the sample at a speed of 100 mm/min in a direction opposite to the one end. Evaluation results are listed in Table 2.

Table 2

| Category | Peel strength [kN/mm] |
|---|---|
| Embodiment 1 | 0.79 |
| Embodiment 2 | 0.78 |
| Embodiment 3 | 0.78 |
| Comparative 1 | 0.79 |
| Comparative 2 | 0.61 |
| Comparative 3 | 0.050 |
| Comparative 4 | 0.052 |

As shown in Table 2, the peel strength of the positive electrode according to Embodiments 1 to 3 is greater than the peel strength of the positive electrode according to Comparatives 1 to 4. Therefore, it may be ascertained that, compared to the positive electrode according to Comparatives 1 to 4, the positive electrode according to Embodiments 1 to 3 has a significantly improved or enhanced adhesive force.

**Evaluation 3: Charge-Discharge Cycle Characteristics**

For each of the rechargeable lithium batteries fabricated in Embodiments 1 to 3 and Comparatives 1 to 4, after a charge-discharge cycle was executed 300 times under the conditions of 25 °C, 0.5 C charge (CC/CV, 4.25 V, 0.05 C cut-off) / 0.5 C discharge (CC, 2.8 V cut-off), a discharge capacity was measured to calculate a capacity retention rate, and the results are shown in Table 3. The capacity retention rate was calculated according to the following Equation 1.

Equation 1

$$\text{Capacity retention rate (\%)} = (\text{discharge capacity after 300 cycles} / \text{initial discharge capacity}) \times 100$$

Table 3

| Category | Capacity retention rate (%) |
|---|---|
| Embodiment 1 | 96.5 |
| Embodiment 2 | 95.7 |
| Embodiment 3 | 93.7 |
| Comparative 1 | 85.6 |
| Comparative 2 | 89.0 |
| Comparative 3 | 83.2 |
| Comparative 4 | 82.1 |

Referring to Table 3, it may be ascertained that the capacity retention rate based on the charge-discharge cycle at room temperature is improved or enhanced in the cases (Embodiments 1 to 3) each of which uses the electrode according to the present disclosure compared to the cases each of which uses the electrode according to Comparatives 1 to 4.

**Evaluation 4: Rapid Charge Characteristics**

Each of the rechargeable lithium batteries fabricated in Embodiments 1 to 3 and Comparatives 1 to 4 was charged at 25 °C with 0.2 C, 0.5 C, 1 C, 2 C, and 3 C under the condition of constant current-constant voltage (CC-CV), and then discharged at 1/3 C, followed by calculating rapid charge characteristics. The results are listed in Table 4. The rapid charge characteristics were calculated according to Equation 2.

Equation 2

$$\text{Rapid charge characteristics (\%)} = (\text{2C CC charge capacity} / \text{0.2 C CC charge capacity}) \times 100$$

Table 4

| Category | Rapid charge characteristics (%) |
|---|---|
| Embodiment 1 | 65 % |

(continued)

| Category | Rapid charge characteristics (%) |
|---|---|
| Embodiment 2 | 62 % |
| Embodiment 3 | 58 % |
| Comparative 1 | 35 % |
| Comparative 2 | 60 % |
| Comparative 3 | 58 % |
| Comparative 4 | 57 % |

Referring to Table 4, it may be ascertained that the rapid charge characteristics at room temperature is improved or enhanced in the cases (Embodiments 1 to 3) each of which uses the electrode according to the present disclosure compared to the cases each of which uses the electrode according to Comparatives 1 to 4.

An electrode according to the present disclosure may be configured or provided such that an active (e.g., electrically active) material layer including a composite conductive (e.g., electrically conductive) material whose ionic conductivity is excellent or suitable is disposed or provided between active (e.g., electrically active) materials whose ionic conductivity is relatively low, thereby having an effect of an improvement or enhancement in lifespan characteristics of a rechargeable lithium battery.

While this disclosure has been described in connection with what is presently considered to be practical example embodiments, it is to be understood that embodiments of the present disclosure are not limited to the disclosed embodiments and are intended to cover one or more suitable modifications and equivalent arrangements included within the spirit and scope of the appended claims and equivalents thereof, and therefore the aforementioned embodiments should be understood to be exemplarily but not limiting this disclosure in any way.

## Claims

**1.** An electrode for a rechargeable lithium battery, the electrode comprising:

an electrode current collector; and
a multi-layered active material layer on the electrode current collector,
wherein the multi-layered active material layer comprises a first active material layer, a second active material layer, and a third active material layer that are sequentially stacked on the electrode current collector,
wherein the first active material layer comprises a first active material,
wherein the second active material layer comprises a second active material and a first composite conductive material,
wherein the third active material layer comprises a third active material and a second composite conductive material,
wherein the first composite conductive material comprises:

a first carbon nanostructure; and
a first polymer physically or chemically bonded to a surface of the first carbon nanostructure,

wherein the second composite conductive material comprises:

a second carbon nanostructure; and
a second polymer physically or chemically bonded to a surface of the second carbon nanostructure,

wherein the first polymer and the second polymer are different from each other, and
wherein an ionic conductivity of the first polymer is higher than an ionic conductivity of the second polymer.

**2.** The electrode as claimed in claim 1, wherein a glass transition temperature ($T_g$) of the second polymer is lower than a glass transition temperature ($T_g$) of the first polymer.

**3.** The electrode as claimed in claim 1 or 2, wherein each of the first carbon nanostructure and the second carbon

nanostructure comprises at least one selected from among carbon nanotube (CNT), carbon nanofiber (CNF), polyacetylene, graphene nanoribbon (GNR), graphene sheet, fullerene, nanodiamond, mesoporous carbon, amorphous carbon, carbon quantum dot, nanoporous carbon, carbon black, nanohorn, and vitreous carbon.

**4.** The electrode as claimed in any of the claims 1 to 3, wherein the first polymer comprises:

a first structural unit derived from a (meth)acrylic monomer or a salt of the (meth)acrylic monomer and represented by Chemical Formula 1-1A or Chemical Formula 1-1B;
a second structural unit derived from a (meth)acrylonitrile monomer and represented by Chemical Formula 1-2; and
a third structural unit derived from a zwitterionic monomer and represented by Chemical Formula 1-3A or Chemical Formula 1-3B,

Chemical Formula 1-1A

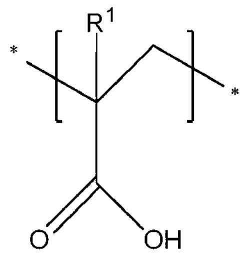

Chemical Formula 1-1B

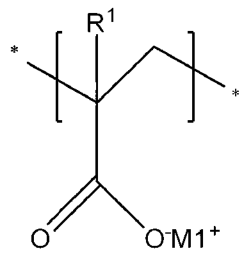

wherein, in Chemical Formulae 1-1A and 1-1B,
$R^1$ are identical to or different from each other and are each independently a hydrogen atom or a C1-C20 alkyl group, and
M1 is an alkali metal,

Chemical Formula 1-2

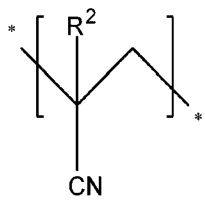

wherein, in Chemical Formula 1-2,
$R^2$ is a hydrogen atom or a C1-C20 alkyl group,

Chemical Formula 1-3A

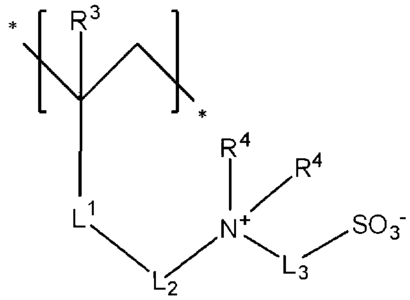

Chemical Formula 1-3B

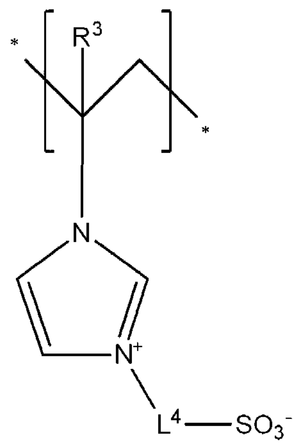

wherein, in Chemical Formulae 1-3A and 1-3B,
$R^3$ are identical to or different from each other and are each independently a hydrogen atom or a C1-C20 alkyl group,
$R^4$ are identical to or different from each other and are each independently a hydrogen atom or a C1-C20 alkyl group,
$L^1$ is *-(C=O)-$NR^4$-$CH_2$-* or *-(C=O)-O-*, and
$L^2$, $L^3$, and $L^4$ are each independently a single bond or a C1-C20 alkylene group.

**5.** The electrode as claimed in any of the claims 1 to 4, wherein the first polymer further comprises a fourth structural unit derived from an alkylene glycol-based monomer or a salt of the alkylene glycol-based monomer,

Chemical Formula 1-4A

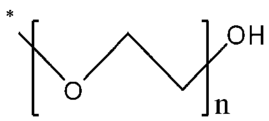

Chemical Formula 1-4B

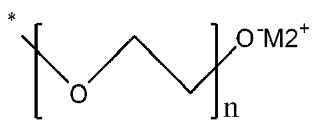

wherein, in Chemical Formulae 1-4A and 1-4B,
M2 is an alkali metal, and

n is an integer of 1 to 100.

6. The electrode as claimed in any of the claims 1 to 5, wherein the second polymer comprises at least one selected from among polyvinyl alcohol (PVA), polyacrylonitrile (PAN), polyacrylic acid (PAA), polyethylene (PE), polyethylene glycol (PEG), polyimide (PI), polyacrylamide (PAM), polystyrene (PS), polyurethane (PU), polyvinyl butyral (PVB), and polyvinylpyrrolidone (PVP).

7. The electrode as claimed in any of the claims 1 to 6, wherein the second polymer comprises at least one selected from:

   a fifth structural unit represented by Chemical Formula 2-1; and
   a sixth structural unit represented by Chemical Formula 2-2,

Chemical Formula 2-1

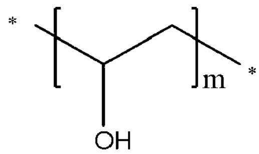

Chemical Formula 2-2

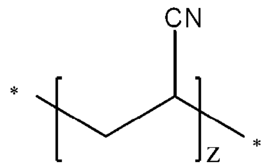

   wherein, in Chemical Formulae 2-1 and 2-2, m and z are an integer of 1 to 100.

8. The electrode as claimed in any of the claims 1 to 7, wherein:

   the first polymer is included in an amount of ≥ 40 wt% to ≤ 80 wt% based on 100 wt% of the first composite conductive material, and
   the second polymer is included in an amount of ≥ 40 wt% to ≤ 80 wt% based on 100 wt% of the second composite conductive material.

9. The electrode as claimed in any of the claims 1 to 8, wherein:

   an amount of the first composite conductive material in the second active material layer is ≥ 0.1 wt% to ≤ 5 wt%, and
   an amount of the second composite conductive material in the third active material layer is ≥ 0.1 wt% to ≤ 5 wt%.

10. The electrode as claimed in any of the claims 1 to 9, wherein a porosity of each of the second active material layer and the third active material layer is higher than a porosity of the first active material layer.

11. The electrode as claimed in any of the claims 1 to 10, wherein the first active material layer further comprises an additive comprising a binder and a conductive material,
wherein an amount of the additive in the first active material layer is 1 to 3 times greater than an amount of the first composite conductive material in the second active material layer or 1 to 3 times greater than an amount of the second composite conductive material in the third active material layer.

12. The electrode as claimed in any of the claims 1 to 11, wherein one selected from the second active material layer and the third active material layer excludes a binder.

13. A method of manufacturing an electrode for a rechargeable lithium battery, the method comprising:

providing an electrode current collector;
providing a first active material layer on the electrode current collector;
providing a second active material layer on the first active material layer; and
providing a third active material layer on the second active material layer,
wherein the first active material layer comprises a first active material,
wherein the second active material layer comprises a second active material and a first composite conductive material,
wherein the third active material layer comprises a third active material and a second composite conductive material,
wherein manufacturing the first composite conductive material comprises:

introducing a first functional group to a surface of a first carbon nanostructure; and
preparing a first mixture by mixing a first polymer and the first carbon nanostructure having the first functional group,

wherein manufacturing the second composite conductive material comprises:

introducing a second functional group to a surface of a second carbon nanostructure; and
preparing a second mixture by mixing a second polymer and the second carbon nanostructure having the second functional group,

wherein the first polymer is different from the second polymer, and
wherein an ionic conductivity of the first polymer is higher than an ionic conductivity of the second polymer.

**14.** The method as claimed in claim 13, wherein:

the manufacturing of the first composite conductive material further comprises agitating and thermally treating the first mixture, and
the manufacturing of the second composite conductive material further comprises agitating and thermally treating the second mixture.

**15.** The method as claimed in claim 13 or 14,

wherein the first composite conductive material comprises:

the first carbon nanostructure having the first functional group; and
the first polymer physically or chemically bonded to a surface of the first carbon nanostructure having the first functional group, and

wherein the second composite conductive material comprises:

the second carbon nanostructure having the second functional group; and
the second polymer physically or chemically bonded to a surface of the second carbon nanostructure having the second functional group.

FIG. 1

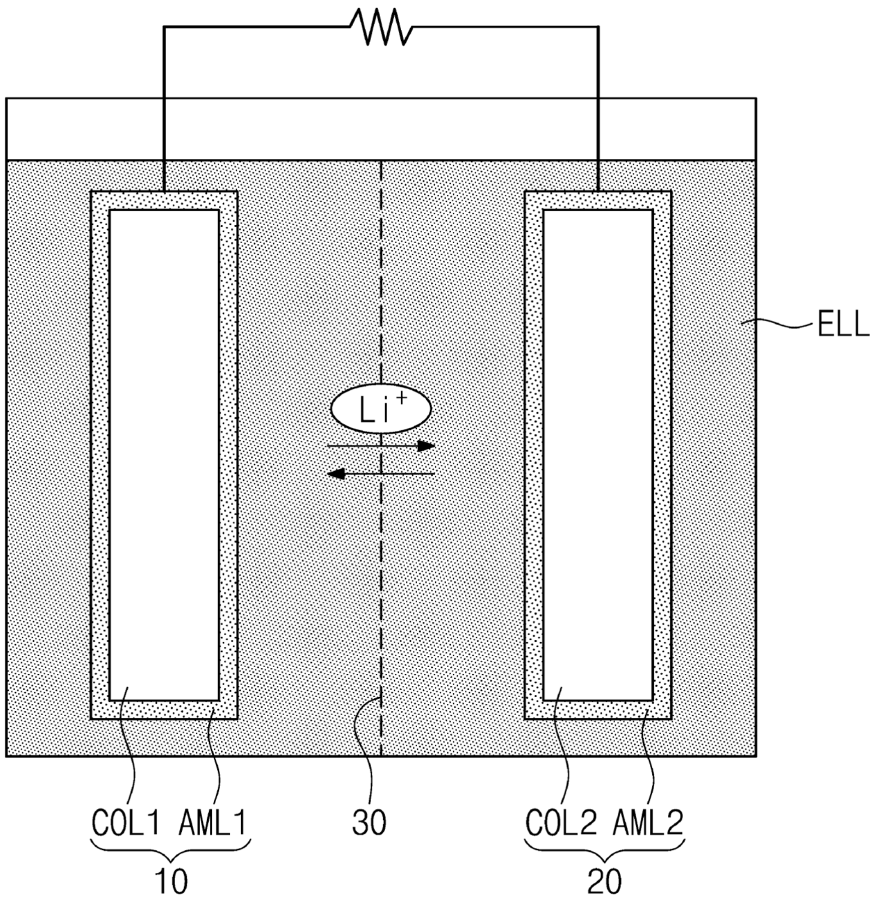

FIG. 2

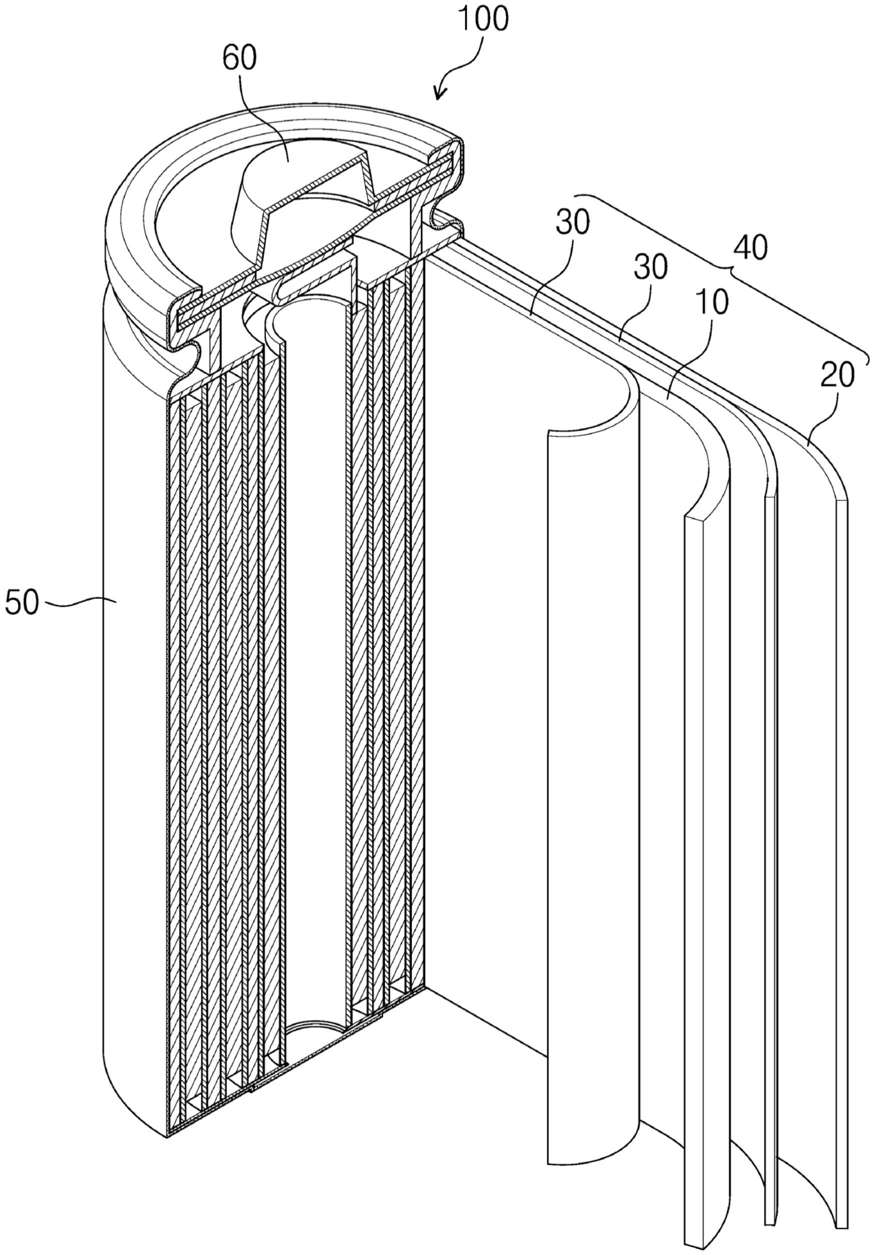

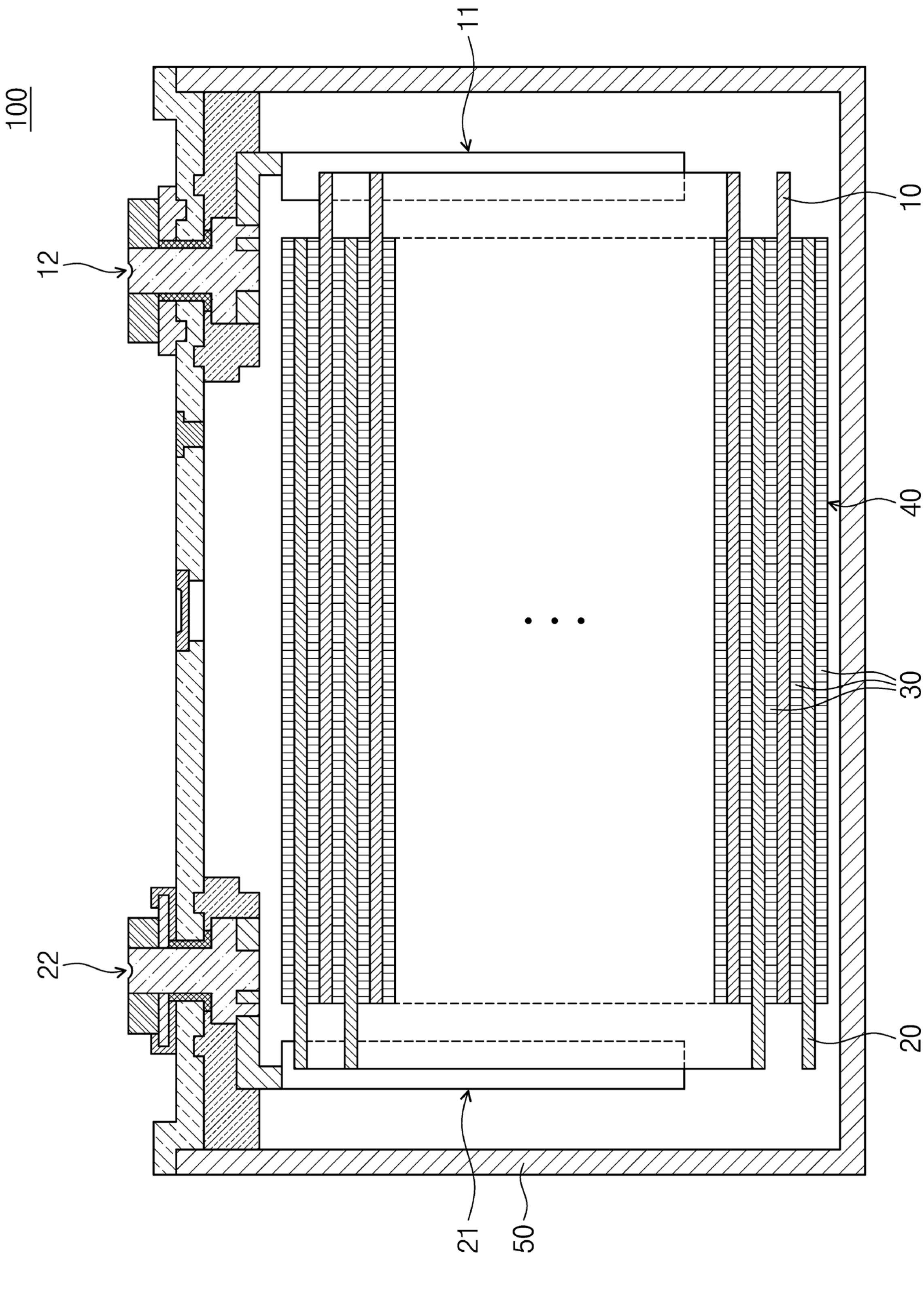


FIG. 3

FIG. 4

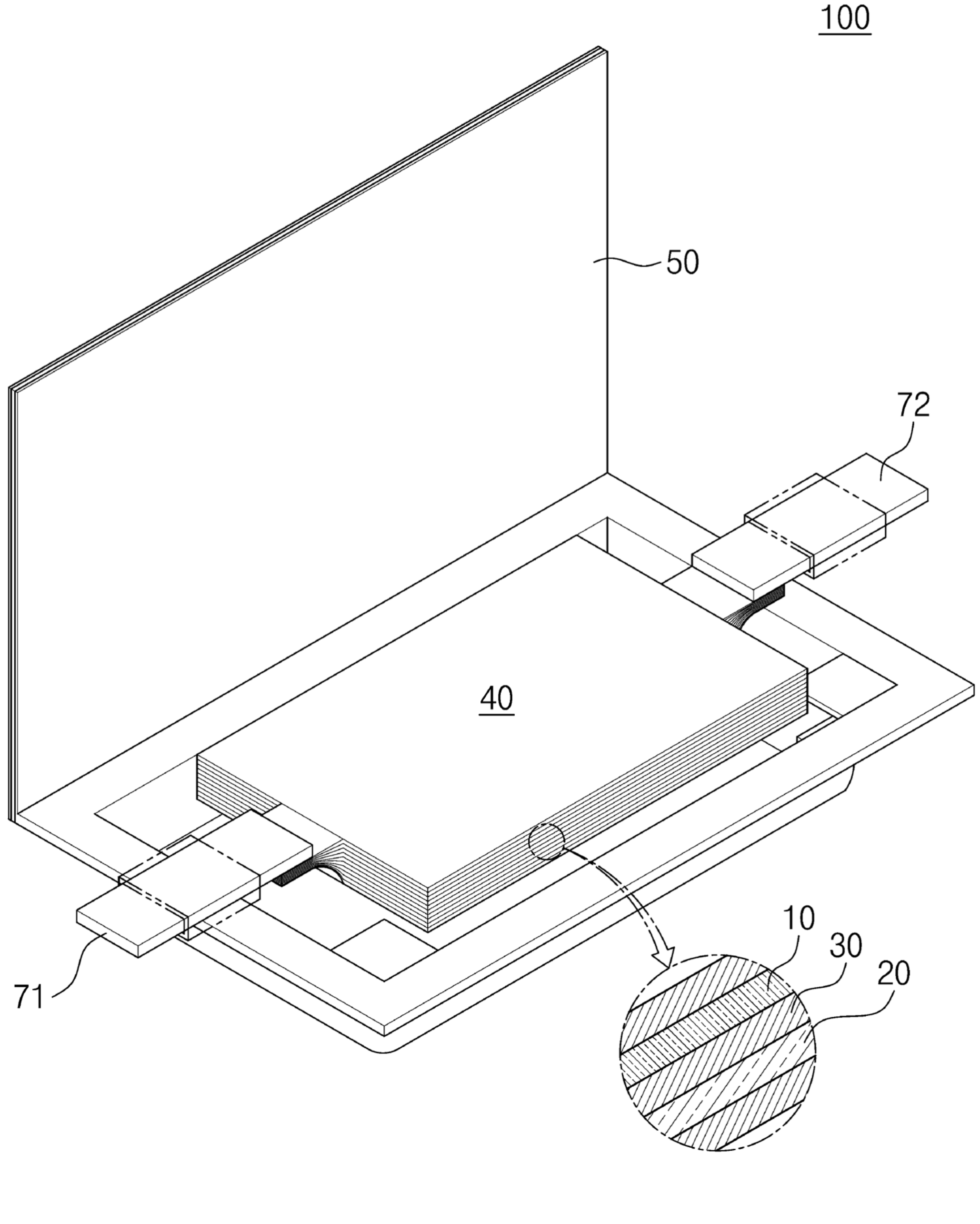

FIG. 5

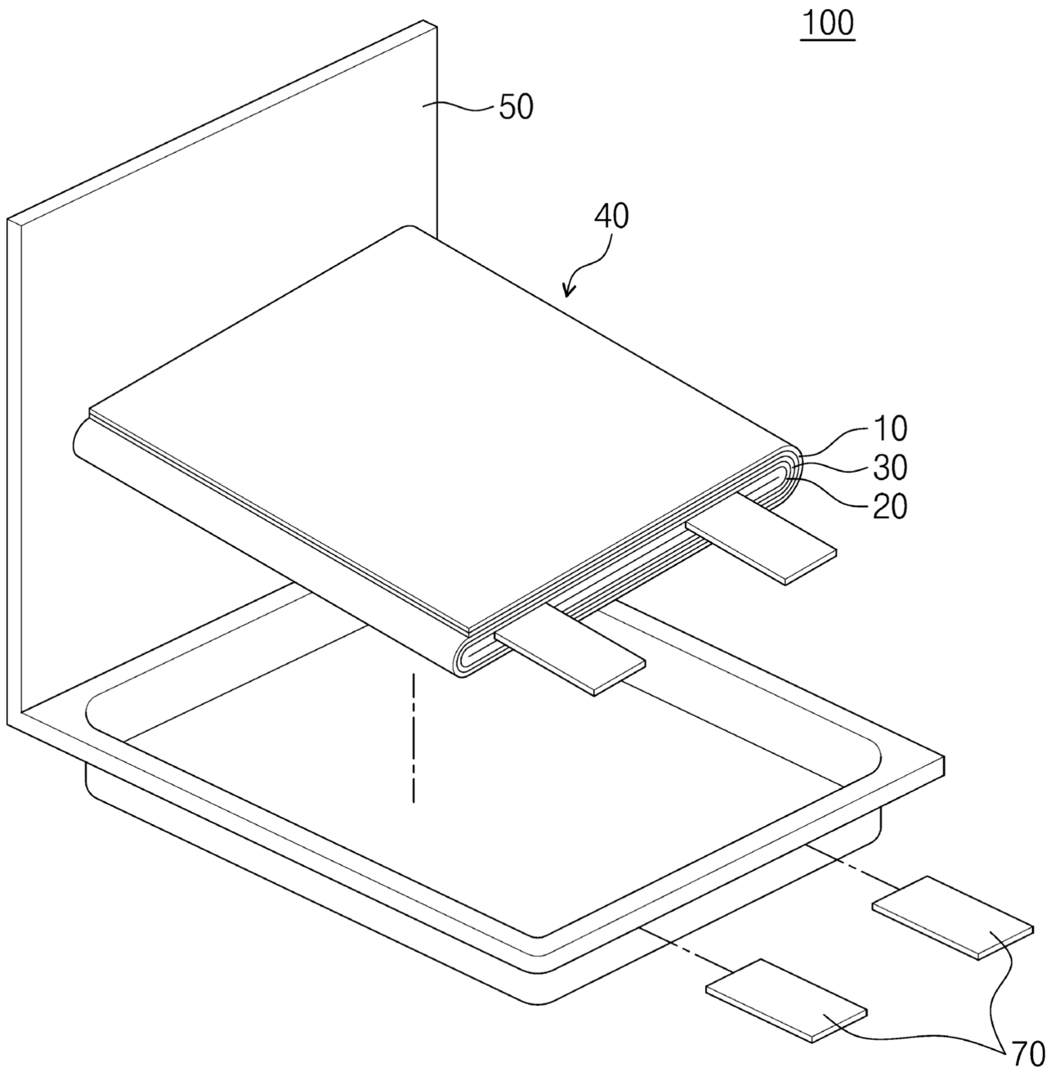

FIG. 6

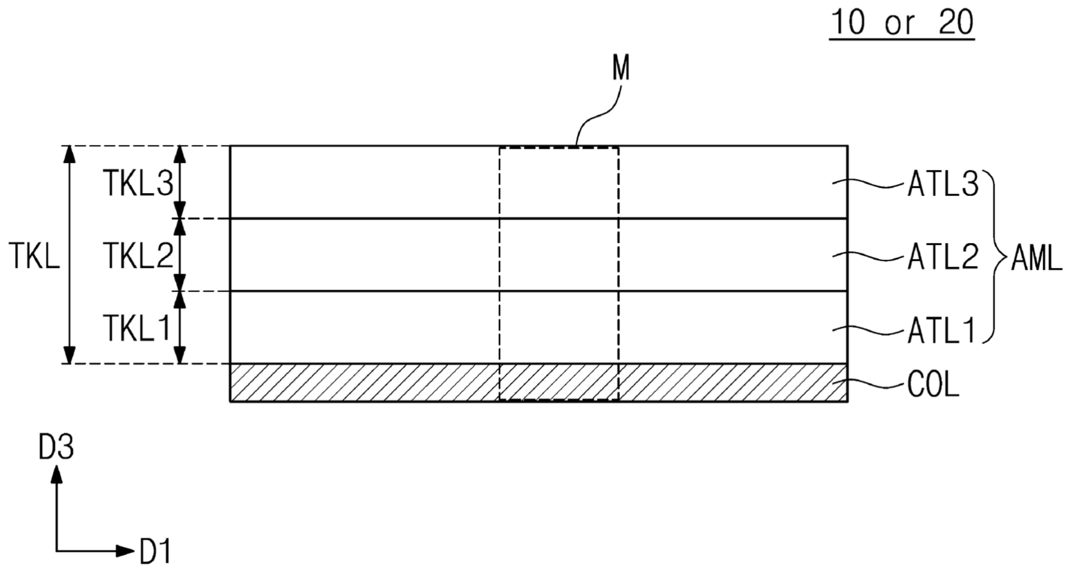

FIG. 7

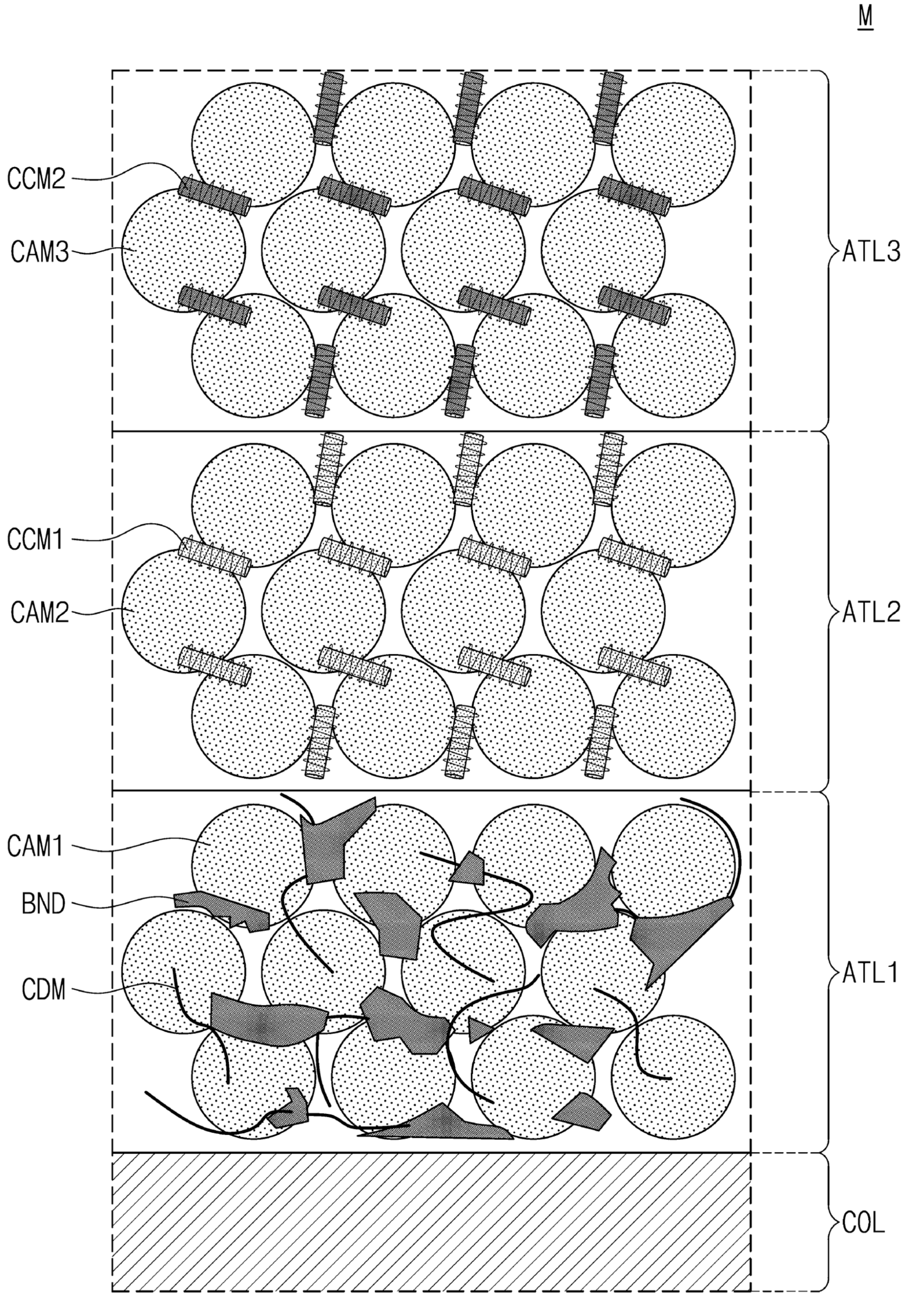

FIG. 8

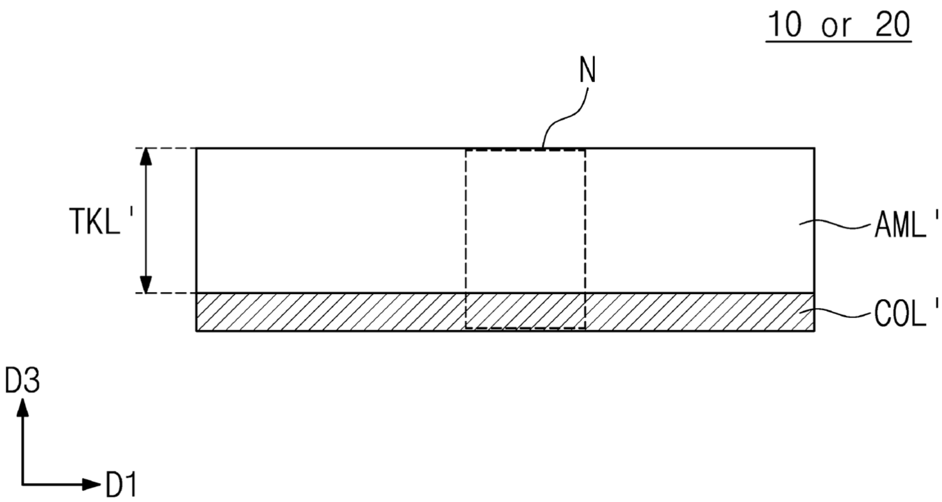

FIG. 9

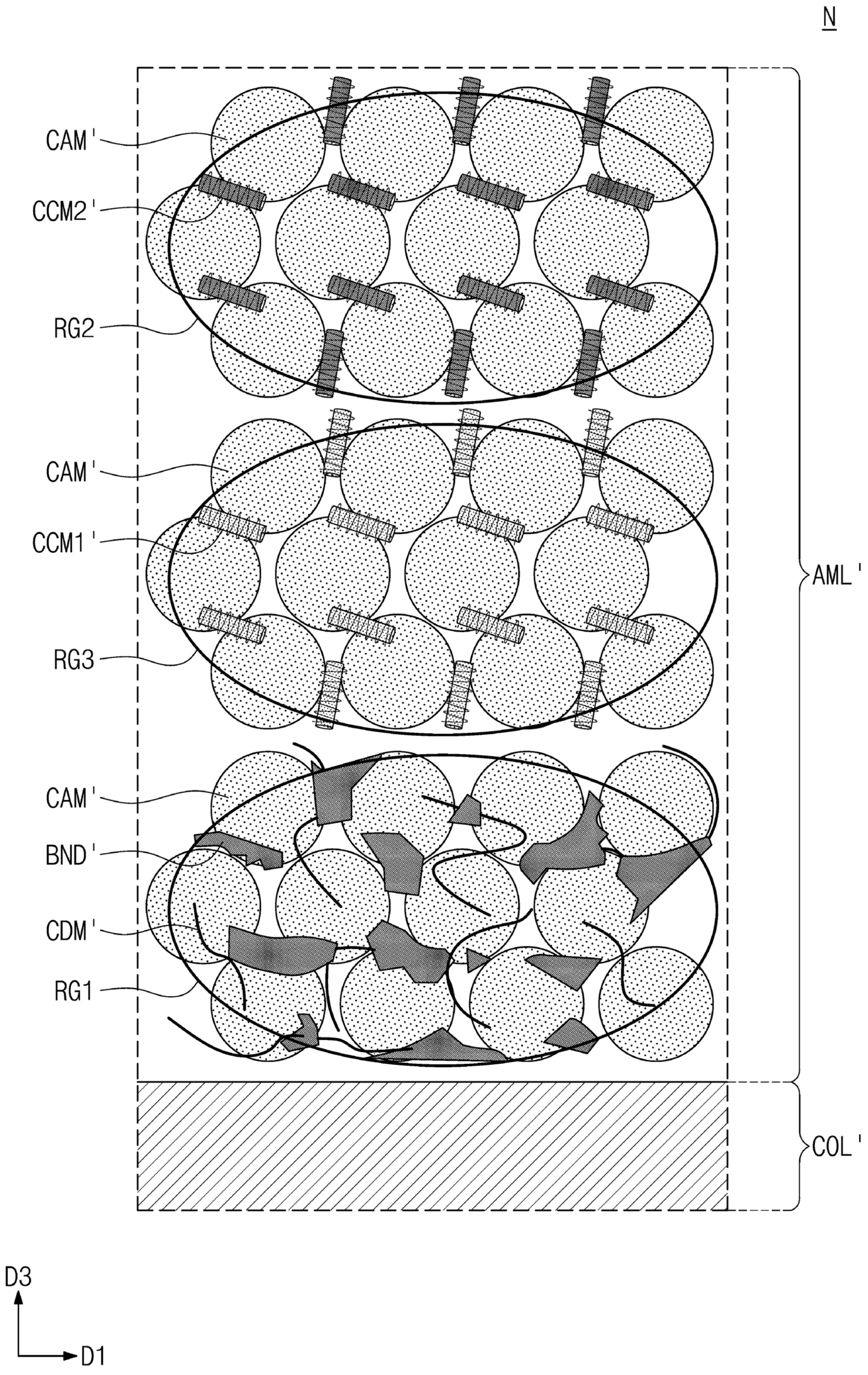

FIG. 10

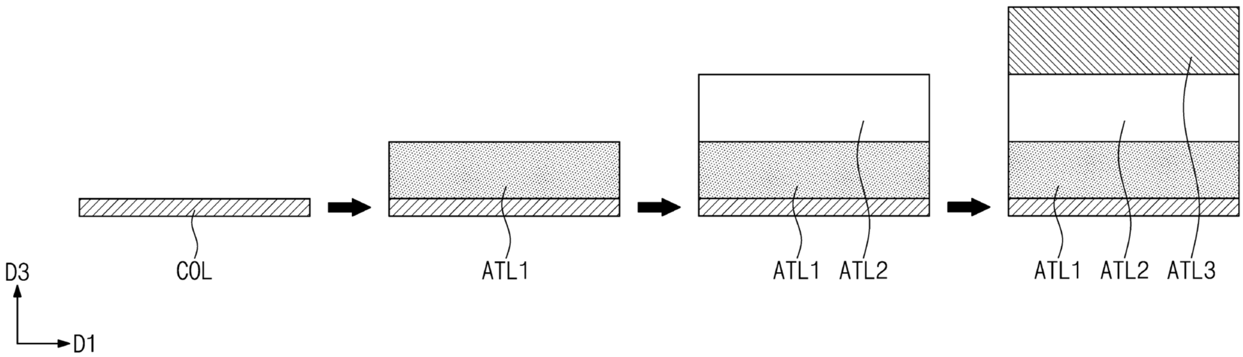
COL
ATL1
ATL1 ATL2
ATL1 ATL2 ATL3
D3
D1

FIG. 11

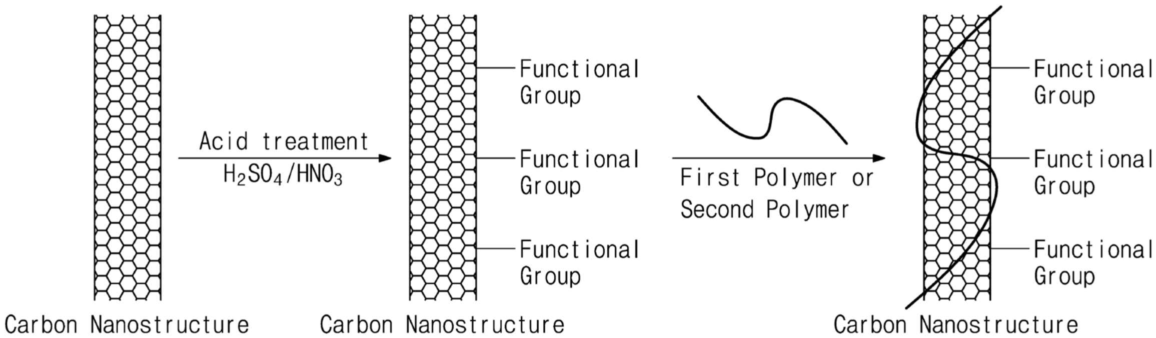
Acid treatment
$H_2SO_4/HNO_3$
Functional Group
Functional Group
Functional Group
First Polymer or Second Polymer
Functional Group
Functional Group
Functional Group
Carbon Nanostructure
Carbon Nanostructure
Carbon Nanostructure

FIG. 12

[SE,x200,000]

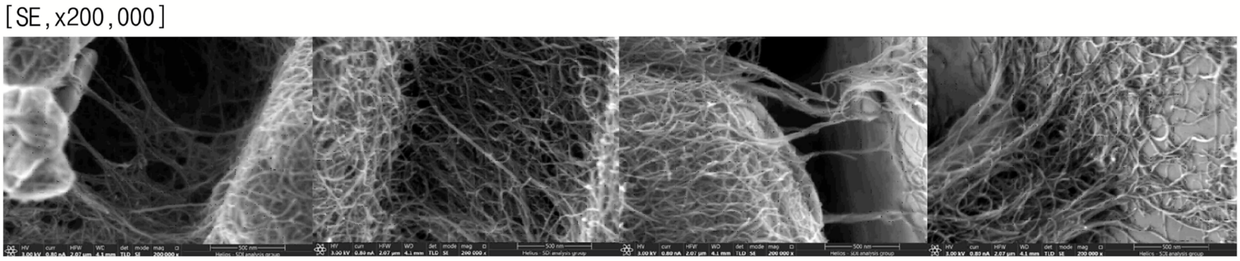

Europäisches Patentamt
European Patent Office
Office européen des brevets

# EUROPEAN SEARCH REPORT

Application Number
EP 25 21 7401

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 200 104 A (NINGDE CONTEMPORARY AMPEREX TECH CO LTD) 26 May 2020 (2020-05-26) * claims 1-7 * ----- | 1-15 | INV. H01M4/131 H01M4/36 H01M4/525 H01M4/62 H01M10/0525 |
| A | CN 112 086 676 A (SK INNOVATION CO LTD) 15 December 2020 (2020-12-15) * claims 1, 9, 10, 11 * ----- | 1-15 | |
| A | CN 113 675 366 A (NINGDE AMPEREX TECHNOLOGY LTD) 19 November 2021 (2021-11-19) * claims 1, 5-7, 10 * ----- | 1-15 | |
| A | US 11 848 447 B2 (SK INNOVATION CO LTD [KR]; SK ON CO LTD [KR]) 19 December 2023 (2023-12-19) * claims 1-3, 7, 8 * ----- | 1-15 | |
| | | | TECHNICAL FIELDS SEARCHED (IPC) |
| | | | H01M |

The present search report has been drawn up for all claims

1

| Place of search | Date of completion of the search | Examiner |
|---|---|---|
| Munich | 19 March 2026 | Martín Fernández, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 21 7401

This annex lists the patent family members relating to the patent documents cited in the above-mentioned European search report. The members are as contained in the European Patent Office EDP file on
The European Patent Office is in no way liable for these particulars which are merely given for the purpose of information.

19-03-2026

| Patent document cited in search report | Publication date | Patent family member(s) | Publication date |
|---|---|---|---|
| CN 111200104 A | 26-05-2020 | CN 111200104 A | 26-05-2020 |
| | | EP 3654421 A1 | 20-05-2020 |
| | | US 2020161695 A1 | 21-05-2020 |
| | | US 2022255114 A1 | 11-08-2022 |
| | | WO 2020098745 A1 | 22-05-2020 |
| CN 112086676 A | 15-12-2020 | CN 112086676 A | 15-12-2020 |
| | | CN 118472348 A | 09-08-2024 |
| | | EP 3751644 A1 | 16-12-2020 |
| | | KR 20200142340 A | 22-12-2020 |
| | | US 2020395603 A1 | 17-12-2020 |
| | | US 2024006589 A1 | 04-01-2024 |
| CN 113675366 A | 19-11-2021 | CN 109461882 A | 12-03-2019 |
| | | CN 113675366 A | 19-11-2021 |
| | | CN 113675367 A | 19-11-2021 |
| | | US 2020144600 A1 | 07-05-2020 |
| | | US 2022006072 A1 | 06-01-2022 |
| | | US 2022006073 A1 | 06-01-2022 |
| US 11848447 B2 | 19-12-2023 | CN 113964318 A | 21-01-2022 |
| | | KR 20220010804 A | 27-01-2022 |
| | | US 2022020987 A1 | 20-01-2022 |



For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020240166238